# EUROPEAN PATENT APPLICATION

(11) **EP 2 416 204 A1**
(43) Date of publication of application: **08.02.2012**
(21) Application number: 10758783.4
(22) Date of filing: 31.03.2010
(51) Int. Cl.: G02C 7/10, C09K 9/02, G02B 1/10, G02B 5/23, G02C 13/00

(54) **PHOTOCHROMIC LENS MANUFACTURING SYSTEM, PHOTOCHROMIC LENS MANUFACTURING DEVICE, PHOTOCHROMIC LENS MANUFACTURING PROGRAM, RECORDING MEDIUM HAVING PHOTOCHROMIC LENS MANUFACTURING PROGRAM RECORDED THEREUPON, AND PHOTOCHROMIC LENS MANUFACTURING METHOD**

(30) Priority: 31.03.2009 JP 2009088049
(71) Applicant: Hoya Corporation, Tokyo 161-8525 (JP)
(72) Inventor: OHTA Hiroshi, Tokyo 161-8525 (JP); IMIZU Takeshi, Tokyo 161-8525 (JP); HIROSE Takamitsu, Tokyo 161-8525 (JP); HASHIMOTO Toshikazu, Tokyo 161-8525 (JP)
(74) Representative: Betten & Resch
(86) International application number: PCT/JP2010/055824
(87) International publication number: WO 2010/114012

(57) **Abstract**

A photochromic lens manufacturing system has an orderer side computer (101) and a manufacturer side computer (201) connected with each other through a communication lime (300), and is adapted to manufacture a photochromic lens with an optical surface forming device (204), a photochromic film forming device (202) and a hard film forming device (204) under control of the manufacturer side computer (201). The orderer side computer (101) transmits lens substrate data related to a substrate material of the lens, optical surface data related to optical surfaces of the lens, data related to the photochromic film and data related to a hard film to the manufacturer side computer (201) through the communication line (300).

The manufacturer side computer (201) comprises: a lens substrate selecting means adapted to select a lens substrate formed of a suitable material based on the lens substrate data received from the orderer side computer; an optical surface forming data selecting means adapted to select suitable optical surface forming data based on the optical surface data and output the selected data to the optical surface forming device (202); a photochromic film forming data selecting means adapted to select forming data of the photochromic film based on the data related to the photochromic film, and output the selected data to the photochromic film forming device (203); and a hard film forming data selecting means adapted to select forming data of the hard film based on the data related to the hard film, and output the selected data to the hard film forming device (204).

## Description

### Technical Field

The present invention relates to a photochromic lens manufacturing system, a photochromic lens manufacturing device, a photochromic lens manufacturing program, a recording medium having the photochromic lens manufacturing program recorded therein, and a photochromic lens manufacturing method.

### Background Art

In recent years, photochromic plastic lenses, to which organic photochromic dye is applied, are commercially available as spectacle lenses. When being placed in a bright outdoor space, these photochromic lenses develop color so as to have the same anti-glare effect as high-density color lenses; while when being brought into an indoor space, these photochromic lenses restore high transmittance. The photochromic lens is required to be able to quickly develop high-density color when a predetermined level of light is incident thereon and quickly fade color when being placed in an environment without the aforesaid light.

A lens obtained by providing a coat containing photochromic pigment (i.e., a photochromic film) to a lens substrate, and a lens obtained by directly kneading photochromic pigment into a plastic lens substrate are both widely used as the photochromic lens. With respect to the photochromic film, various manufacturing methods are proposed to obtain a photochromic lens excellent in optical responsivity (i.e., response rate and color density), color tone, and adhesion to both the lens substrate and hard coat layer.

However, the plastic lens for correcting the vision of the user is required to have complex optical design according to prescription, so that it is necessary to manufacture a lens having complex optical surfaces. As an example of complex prescription, for example, there is a kind of progressive-addition lens which is designed to have a distance vision and a near vision, wherein the power gradually changes from the distance vision to the near vision. Since such a lens is manufactured on made-to-order basis, it will take long time until the lens is supplied to the user. Other lenses manufactured on made-to-order basis include prismatic lens and the like.

When manufacturing a lens on made-to-order basis, an optical surface is formed on one side (for example, the convex-side) according to the prescription upon receiving an order, and then an optical surface is formed on the other side (for example, concave-side), so that a lens is finished. With respect to the photochromic lens manufactured on made-to-order basis, a manufacturing method is used in which an optical surface is formed on one side, then a photochromic film is formed, and then an optical surface is formed on the other side.

Quantify of order for the photochromic lenses is smaller than normal lenses. Thus, usually the photochromic lens is manufactured on made-to-order basis according to order details upon receiving an order, instead of previously manufacturing the photochromic lenses and stocking the manufactured lens. However, in the case where the photochromic function is provided to the lens by a photochromic dye manufacturer, a suitable optical surface is formed on one side upon receiving an order, a semi-finished lens having a proper optical surface is selected after receiving an order, and then such lens is transferred to the dye manufacturer where the photochromic function is provided, so that long delivery time is necessary. Further, since the photochromic film is soft, there is a concern that damage might be caused when transferring the lens from the dye manufacturer. Furthermore, if the lens is stored for long time in a state where photochromic function has been provided, there is a case that color tone has changed compared to the time right after the photochromic function had been provided, as well as a case that coloring rate and fading rate have changed.

In order to avoid such cases, a technique is proposed to form a protective film on the surface of the photochromic film. For example, Patent document 1 and Patent document 2 each disclose an art for providing an acrylic resin protective film on the photochromic film. These arts are proposed to improve impact resistance and storage property of the photochromic film by protecting the photochromic film.

On the other hand, Patent document 3 discloses an art for performing a continuous production, so that necessity of transferring the lenses having the photochromic function added thereto (such as case where the photochromic function is provided by a dye manufacturer) can be eliminated. The art disclosed in Patent document 3 is a technique for manufacturing a photochromic lens by combining a plastic resin into which photochromic dye can be kneaded, with a clear and colorless plastic resin within a die. If optical property is actively provided to the convex-side optical surface, the convex-side optical surface will-become a complex and delicate curved surface. The technique disclosed in Patent document 3 can only cope with a relatively simple convex surface shape, but can not be applied to a lens whose convex-side optical surface is formed by creating and polishing process and therefore has a complex shape.

### Prior art documents

### Patent documents

Patent document 1: Patent Application Publication No. 2007-520757
Patent document 2: Patent Application Publication No. 2005-514647
Patent document 3: Patent Application Publication No. H09-506560

### Disclosure of the Intention

### Problems to be Solved by the Intention

By providing a protective film proposed in Patent document 1 and Patent document 2 on the surface of the photochromic film, damage and deterioration of the photochromic film when transferring the lens is restrained. However, in the plastic lens, the aforesaid protective film formed on the photochromic film does not provide new function to the plastic lens. Further, due to the provision of the protective film, some technical problems are raised such as preventing deterioration of the protective film, preventing infiltration of the photochromic dye into the protective film, securing adhesion between the photochromic film and the protective film, and adhesion between the protective film and the hard coat.

With the art disclosed in Patent document 3, it is possible to avoid the transfer of the lens to an external manufacturer for providing photochromic function, however it is not easy to combine two kinds of resin within a die.

Thus, in the case where the photochromic lens is manufactured on made-to-order basis, the method of using the semi-finished lens having an optical surface previously formed on one side, and stocking the semi-finished lenses in a state where the photochromic function has been provided thereto is also an effective method for reducing time until shipment as much as possible. However, if various kinds of semi-finished lenses are stocked in response to various prescriptions, a very large amount of stock will be needed. Further, if the lenses are stored as stock, photochromic function will deteriorate, and the lens substrate itself will deteriorate. Furthermore, when new photochromic lens has been developed, the old lenses have to be cleared out. Obviously such things are not desirable.

The same problems will be caused to a lens stocked in a state where both surfaces thereof have been processed into optical surfaces (i.e., so-called finished lens). In other words, there will arise a problem of the protective film if the photochromic function is added by a dye manufacturer, otherwise it will be difficult to combine two kinds of material with a die. The problem that providing the photochromic function to the finished lenses satisfying various prescriptions and keeping a large stock of such lenses will cause deterioration of photochromic function still remains outstanding.

To solve the above problems, an object of the present invention is to make it possible to manufacture a lens having photochromic function on made-to-order basis and ship the manufactured lens within relatively short time, without keeping a stack of lenses having the photochromic function added thereto.

### Means for Solving the Problems

To solve the above problems, a photochromic lens manufacturing system according to an aspect of the present invention has an orderer side computer and a manufacturer side computer connected with each other through a communication line, and is adapted to manufacture a photochromic lens using an optical surface forming device, a photochromic film forming device and a hard film forming device arranged on the manufacturer side and controlled by the manufacturer side computer. The orderer side computer transmits the following data to the manufacturer side computer through the communication line: lens substrate data related to substrate material of the lens, optical surface data related to optical surfaces of the lens, data related to a photochromic film, and data related to a hard film.

Further, the manufacturer side computer comprises: a lens substrate selecting means adapted to select a lens substrate formed of a suitable material based on the lens substrate data received from the orderer side computer; an optical surface forming data selecting means adapted to select suitable optical surface forming data based on the optical surface data and output the selected data to the optical surface forming device; a photochromic film forming data selecting means adapted to select at least forming data of the photochromic film based on the data related to the photochromic film, and output the selected data to the photochromic film forming device; and a hard film forming data selecting means adapted to select at least forming data of the hard film based on the data related to the hard film, and output the selected data to the hard film forming device. The optical surface forming device forms an optical surface on the lens substrate selected by the lens substrate selecting means based on the optical surface forming data selected by the optical surface forming data. The photochromic film forming device forms the photochromic film on the optical surface of the lens substrate based on the data related to the photochromic film inputted from the manufacturer side computer. The hard film forming device forms the hard film on the lens substrate based on the data related to the hard film inputted from the manufacturer side computer.

With such a photochromic lens manufacturing system according to the present invention, the formation of the optical surface on the lens substrate selected based on the lens substrate data received by the manufacturer side computer, the formation of the photochromic film and the formation of the hard film are performed as a series of steps. In other words, in the manufacturer side computer, the forming data of optical surface is outputted by the optical surface forming data selecting means to the optical surface forming device 550, and similarly the forming data of photochromic film and the forming data of hard film are respectively outputted by the photochromic film forming data selecting means and the hard film forming data selecting means to the photochromic film forming device and the hard film forming device, so that the optical surface and the respective films are formed as a series of steps. Thus, it is possible to more rapidly manufacture the photochromic lens while restraining the deterioration of the photochromic function caused after the photochromic function has been provided to the lens substrate.

Incidentally, in the photochromic lens manufacturing system according to the present invention, it is preferred that the photochromic film forming device is a wet film forming device. For example, in the case where the photochromic lens manufacturing system is applied to a spectacle lens, when providing the photochromic function to a lens substrate selected according to the prescription, although the photochromic lens may be obtained by a method of molding a plastic material having photochromic figment kneaded therein or by a method of combining a dyed plastic material with a clear and colorless plastic material, however a lens having photochromic function can be obtained in a short time by employing the wet film forming method. Thus, it is possible to more rapidly manufacture the photochromic lens after receiving an order.

It is preferred that the wet film forming device is a coating device that forms the film using a spin-coating method. In the case where an other type of wet film forming device, such as a dipping device, is employed, the photochromic liquid is coated on both surfaces, so that if an optical surface is to be formed on one surface after the photochromic liquid has been coated, the coated film on this surface will be ablated as a result, and therefore the use of the photochromic liquid increases unnecessarily. While in the case where the spin-coating method is used, it is possible to efficiently and uniformly form a photochromic film on one surface only.

Further, in the case where the spin-coating method is used, since it is possible to obtain more uniform the thickness of the coated film, unevenness in density of color tends not to occur, i.e., photochromic function can be maintained more uniformly. Furthermore, in the case where the spin-coating method is used, the use of the photochromic liquid can be reduced compared to other wet film forming methods.

Similarly, it is preferred that the hard film forming device is a wet film forming device, and it is particularly preferred that the hard film forming device is a coating device that uses a spin-coating method. By employing a wet film forming device, particularly a coating device that uses a spin-coating method, it is possible to rapidly form the hard film and therefore expedite the production of the photochromic lens, so that productivity can be improved.

Further, in the photochromic lens manufacturing system according to the present invention, it is preferred that at least either of color and density is included in the data related to the photochromic film. In such a case, it is preferred that the manufacturer side computer has a function of selecting, as the forming data of the photochromic film, at least either of the type of photochromic liquid corresponding to the color of the photochromic film and the thickness of coated film corresponding to the density of the photochromic film, and outputting the selected data to the photochromic film forming device. For example, in a lens store or the like, the data related to the performance of the photochromic lens is inputted to the orderer side computer, and the lens is manufactured by the manufacturer side computer of a lens manufacturer or the lens store itself using such data, so that it is possible to more rapidly manufacture a photochromic lens with the performance required by the user. Further, by forming the photochromic film corresponding to the order details own color and density in such a manner, it is possible to reduce the cost for stocking and storing the lens substrates having photochromic function.

Further, the photochromic lens manufacturing system according to the present invention may include a lens substrate storage device adapted to store a plurality of types of lens substrates. In such a case, the lens substrate selecting means of the manufacturer side computer may output lens substrate selection data to the lens substrate storage device, the lens substrate selection data being adapted to specify the type of the lens substrate selected based on the received lens substrate data, and the lens substrate storage device may have a transfer means adapted to select a lens substrate fitting the data related to the type of the lens substrate and transfer the selected lens substrate to the optical surface forming device.

Thus, the lens substrate storage device adapted to store a plurality of types of lens substrates is provided, and the manufacturer side computer selects a suitable lens substrate from the plurality of types of lens substrates, and transfers the selected lens substrate to the optical surface forming device under automatic control, and thereby selection of the lens substrate and attachment of the lens substrate to the optical surface forming device can be performed rapidly, so that productivity of the photochromic lens can be more improved.

Incidentally, in the case where an antireflection film is to be further formed on the hard film, the data transmitted from the orderer side computer may include data related to the antireflection film, an antireflection film forming device may be provided, and the manufacturer side computer may have an antireflection film data selecting means adapted to select forming data of the antireflection film based on the data related to the antireflection film and output the selected forming data of the antireflection film to the antireflection film forming device. In such a case, the antireflection film forming device may either be a dry film forming device using a vacuum device, or be a wet film forming device that forms film by a spin-coating method. It is preferred that the form of antireflection film forming device is set according to various conditions such as the scale of the manufacturing facility.

The present invention further provides a photochromic lens manufacturing device capable of manufacturing a photochromic lens even in a lens store.
The photochromic lens manufacturing device according to the present invention includes a data storage unit adapted to store information related to the lens to be manufactured, a surface treatment unit adapted to perform surface treatment of the photochromic film forming and the like, and a control unit adapted to control the operation of the surface treatment unit.
Surface treatment data is inputted to the data storage unit, the surface treatment data including: optical surface data related to optical surfaces of a lens to be manufactured, lens substrate data related to lens substrate material, and photochromic data at least related to a photochromic film.
The surface treatment unit includes an optical surface forming means, a photochromic film forming means and a hard film forming weans, wherein the optical surface forming means is adapted to form, based on the optical surface data, an optical surface on the lens substrate selected based on the lens substrate data, the photochromic film forming means is adapted to form, based on the photochromic data, a photochromic film on a lens substrate having an optical surface formed on at least the convex-side thereof, and the hard film forming means is adapted to form a hard film.
The surface treatment unit is controlled by the control unit. The control unit includes an optical surface forming control device, a first film forming control device and a second film forming control device, wherein the optical surface forming control device is adapted to set a forming condition of the optical surface base on the optical surface data and the lens substrate data, the first film forming control device is adapted to set a film forming condition of the photochromic film based on the optical surface data, the lens substrate data and the photochromic data, and the second film forming control device is adapted to set a film forming condition of the hard film based on the lens substrate data.

In the photochromic lens manufacturing device according to the present invention, the optical surface forming control device of the control unit sets a suitable optical surface forming condition, and the first film forming control device sets suitable film forming condition based on the optical surface data related to the shape of the optical surface and the lens substrate data related to the material of the lens substrate and the like stored in the data storage unit. Further, selection of the photochromic pigment, selection of the coating liquid and the like based on the photochromic data are also performed by the control unit. For example, photochromic film material can be prepared within the photochromic film forming device. With the manufacturing device according to the present invention, even a person (such as a staff of a lens store) having less knowledge on optical surface data, lens substrate material, photochromic material and/or less knowledge on coating can preferably manufacture a photochromic lens desired by the used.

Further, with the photochromic lens manufacturing device of the present invention, a high-quality lens can be can be rapidly manufactured even if the lens is an individually designed lens (i.e., a so-called custom-designed lens) provided with photochromic function, wherein the optical property of the individually designed lens is set according to the visual acuity of the user.

The preferable manufacturing device is the one whose photochromic film forming means is a spin-coating device. In such a case, the spin-coating device includes a rotatable frame adapted to mount the lens substrate with a surface-to-be-coated (i.e., an optical surface onto which the photochromic film is to be formed) facing upward, and a dropping means adapted to drop a photochromic liquid from a nozzle onto the surface-to-be-coated. The optical surface data stored in the data storage unit includes curve data related to curve of the curved surface of the optical surface, and dimension data related to the outside dimension of the optical surface, and the first film forming control device of the control unit controls the distance between the surface-to-be-coated and the nozzle based on the curve data, and controls the movement trajectory of the nozzle based on the dimension data.

The coating liquid for forming the photochromic film generally has high viscosity. Thus, in the photochromic film forming means, it necessary to distinctly control the place where the coating liquid is to be supplied to the surface-to-be-coated and the height at which the coating liquid is to be supplied to the surface-to-be-coated. However, in the case where the lens is a plastic lens, since the lens may be a single-vision lens or a progressive-addition lens, the shape of the curved surface changes largely. In contrast, since the photochromic lens manufacturing device according to the present invention can select the supply position based on the dimension data of the lens and adjust the dropping height based on the curved surface data of the lens, it is possible to form a desired photochromic film regardless of the shape of the curved surface of the optical surface. Thus, it is possible to manufacture a high-quality photochromic lens while restraining the unevenness in thickness of the coated film regardless of the shape of the curved surface of the optical surface of the lens.

Further, in the photochromic lens manufacturing device according to the present invention, it is preferred that at least either of color and density is included in the photochromic data, and, as the film forming condition of the photochromic film, the first film forming control device selects at least either of the type of the photochromic liquid corresponding to the color of the photochromic film and the thickness of the coated film corresponding to the density of the photochromic film, and outputs the selected data to the photochromic film forming means.
Due to such function, a photochromic lens with the photochromic function desired the user can be manufactured even by an operator who has no particular knowledge.

Further, the present invention provides a photochromic lens manufacturing program incorporated in the manufacturer side computer of the photochromic lens manufacturing system and a recording medium having the program recorded therein. The program causes a photochromic lens manufacturing computer incorporated in the photochromic lens manufacturing device to implement the following functions, the photochromic lens manufacturing computer having a data storage unit:
(a) a function of selecting optical surface data related to optical surfaces of a lens substrate from the data storage unit;
(b) a function of selecting lens substrate data related to the lens substrate material from the data storage unit;
(c) a function of selecting photochromic data related to a photochromic film from the data storage unit;
(d) a function of selecting surface treatment data from the data storage unit, the surface treatment data including data related to a hard film;
(e) a lens substrate selecting function of selecting a suitable lens substrate based on the lens substrate data;
(f) an optical surface forming data selecting function of selecting optical surface forming data for forming an optical surface on the selected lens substrate based on the lens substrate data and the optical surface data;
(g) a photochromic film forming data selecting function of selecting at least forming data of the photochromic film based on the photochromic data, and outputting the selected data to a photochromic film forming device; and
(h) a hard film forming data selecting function of selecting at least forming data of the hard film based on the data related to the hard film, and outputting the selected data to a hard film forming device.

By causing the photochromic lens manufacturing computer to execute the photochromic lens manufacturing program having such functions, it is possible to preferably operate the manufacturer side computer of the photochromic lens manufacturing system.

Further, the photochromic lens manufacturing method according to the present invention includes:
(1) a first optical surface forming step of forming an optical surface on at least one surface of a lens substrate;
(2) a photochromic film forming step of providing a photochromic function to the surface having the optical surface formed thereon;
(3) a hard film forming step of providing a hard film to at least the surface having the photochromic film formed thereon, and (4) a second optical surface forming step of forming an optical surface on the other surface of the lens substrate.
The first optical surface forming step, the photochromic film forming step, the hard film forming step and the second optical surface forming step are performed as a series of steps.

In such a photochromic lens manufacturing method according to present invention, the first optical surface forming step, the photochromic film forming step, the hard film forming step, and the second optical surface forming step are performed as a series of steps. As an example, an optical surface corresponding to the data of the received order may be formed on one surface (the convex surface, for example), and the photochromic function is first provided to such surface. Thereafter, the hard film forming step and the second optical surface forming step may be continuously performed in this order, or the second optical surface forming step and the hard film forming step may be continuously performed in this order.

Thus, it is possible to rapidly manufacture various types of lenses having photochromic function by forming an optical surface on the lens substrate and forming a photochromic film as a series of consecutive steps. Further, it is not necessary to prepare and store a large mount of lenses each obtained by forming a photochromic film on a finished lens or semi-finished lens corresponding to the prescription of a spectacle lens, for example. Thus, it is possible to manufacture a photochromic lens meeting the requirement of the user not only within short time but also with low cost. Further, since at least the hard film (such is the hard coat) is consecutively formed on the photochromic film, it is not necessary to additionally form an unnecessary film (such as a photochromic film protecting film) on the photochromic film. Thus, it is possible to restrain physical deterioration of the lens itself caused by quality deterioration of the photochromic function, round-trip transfer to and from the dye manufacturer, and the like. In addition to the hard coat, the hard film may also include a foundation layer for improving the adhesion of the hard coat (i.e., a so-called primer layer). In the present invention, whether or not there is other layer between the both is not limited as long as both the optical property, which is obtained based on the shape of the optical surface, and the photochromic property, which is obtained based on the photochromic film, can be achieved.

Incidentally, in the case where, after the photochromic film forming step, the second optical surface forming step and the hard film forming step are continuously performed in this order, the hard film is formed at least on the surface having the photochromic film formed thereon; however, it is preferred that the hard film is also be formed on the other optical surface.

Further, in the case where, after the photochromic film forming step, the hard film forming step and the second optical surface forming step are continuously performed in this order, a hard film may be formed on the surface having the second optical surface formed thereon (the surface having no photochromic film formed thereon). Due to the hard film, scratch resistance of the second optical surface can be improved. By doing so, quality deterioration of the photochromic function can be restrained without adding an unnecessary protective film on the photochromic film.

Further, in the second optical surface forming step, it is preferred that the optical surface is formed by optical polishing. By forming optical surface by optical polishing, it is possible to form an excellent optical surface without causing quality deterioration of the photochromic film formed on the other surface.

Incidentally, the photochromic lens manufacturing method may further include a step for firming a foundation layer (i.e., a so-called primer layer) between the photochromic film and the lens substrate. By formed the foundation layer, shrinkage of the photochromic film caused during the polymerisation is alleviated by the foundation layer. As a result, joining state between the surface of the lens substrate and the photochromic film is improved, and the photochromic film is inhibited from peeling off. Further, since adhesion between the lens substrate and the photochromic film is improved, the photochromic film is inhibited from peeling off. Thus, it is possible to manufacture a photochromic lens with better quality.

Incidentally, the photochromic lens manufacturing method may further include a step of forming a material layer capable of restrain movement of photochromic film material components when forming the photochromic film before or after the foundation layer forming step (i.e., between the lens substrate and the foundation layer or between the foundation layer and the photochromic film), or further, before the hard film forming step after the photochromic film forming step. Further, the photochromic lens manufacturing method may includes a step of forming, after the photochromic film forming step, a foundation layer for improving adhesion of the hard film.

### Advantages of the Intention

According to the present invention, it is possible to reduce necessary time between receiving order to shipping product without storing a large mount of lenses and lens substrates having a photochromic film formed thereon for long time, and it is possible to manufacture the photochromic lens while restraining the deterioration of the photochromic function.

### Brief Description of Drawings

FIG. 1 is a block diagram showing a photochromic lens manufacturing system according to an embodiment of the present intention;
FIG. 2 is a block diagram for explaining the function of a manufacturer side computer of the photochromic lens manufacturing system shown in FIG. 1;
FIG. 3 is a diagram showing the configuration of an example of a control system of a photochromic lens manufacturing device;
FIG. 4 is a view showing the schematic configuration of an example of a photochromic film forming device;
FIG. 5 is a view schematically showing positional relationship between a dispenser of the photochromic film forming device shown in FIG. 4 and a lens substrate;
FIG. 6 is a plan view showing dropping state of a coating liquid dropped by the dispenser of the photochromic film forming device shown in FIG. 4 onto a surface-to-be coated of the lens substrate;
FIG. 7 is a view showing the configuration of an example of an optical surface forming device;
FIG. 8 is a flowchart for explaining a photochromic lens manufacturing method according to an embodiment of the present invention;
FIG. 9 is a flowchart for explaining a photochromic film forming step in the flowchart for explaining a photochromic lens manufacturing method shown in FIG. 8;
FIG. 10 is a graph showing change of curvature radius with respect to the center thickness after one-side optical surface is formed for both a lens substrate and a lens substrate having the photochromic film formed thereon;
FIG. 11 is a graph showing color coordinates of a lens substrate having a photochromic film (brown) formed thereon before and after being stored;
FIG. 12 is a graph showing color coordinates of a lens substrate having a photochromic film (gray) formed thereon before and after being stored;
FIG. 13 is a graph showing color spectral transmittance curves after manufacture of the photochromic lens (brown) according to the embodiment; and
FIG. 14 is a graph showing color spectral transmittance curves after manufacture of the photochromic lens (gray) according to the embodiment.

### Best Modes for Carrying Out the Invention

A photochromic lens manufacturing method and a photochromic lens manufacturing system according to embodiments of the present invention will be described as follows. However, it should be noted that the present invention is not limited to the following embodiments. Incidentally, although the following embodiments are based on an example in which the photochromic lens manufactured is a spectacle photochromic lens, the present invention may also be applied to the manufacture of various kinds of optical lenses having photochromic function other than the spectacle photochromic lens. The description will be given in the following order.

1. Embodiment of photochromic lens manufacturing system
2. Embodiment of photochromic lens manufacturing device
3. Embodiment of photochromic lens manufacturing method
   [1] Material of photochromic lens
   [2] Forming method of photochromic film
   [3] Forming method of optical surface
   [4] Manufacturing process
4. Examples and comparative examples

### 1. Embodiment of photochromic lens manufacturing system

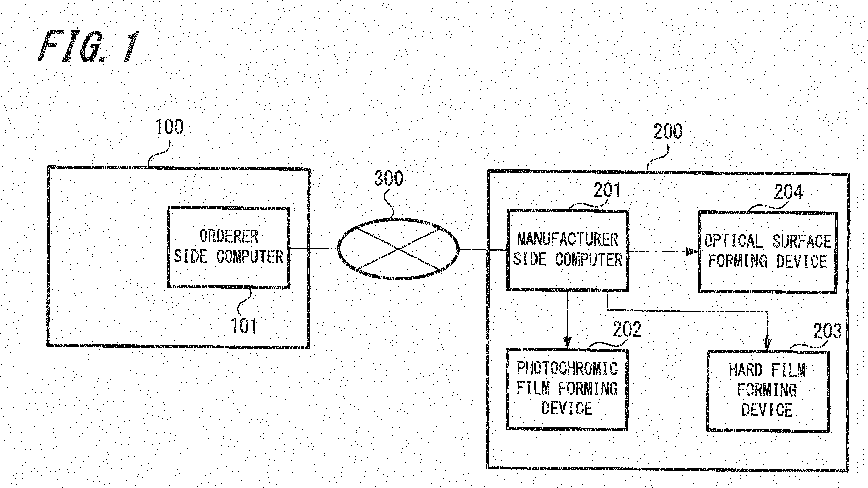

FIG. 1 is a block diagram showing an embodiment of an entire system for supplying photochromic lens, to which the photochromic lens manufacturing system according to the present invention is applied. As shown in FIG. 1, an orderer 100, such as a lens store, an ophthalmologist or the like, is provided with an orderer side computer 101. The orderer side computer 101 is connected with a manufacturer side computer 201 arranged in a lens processing equipment 200 through a communication line 300, such as a wireless LAN communication line, an Internet communication line or the like, so that communication can be performed between the orderer side computer 101 and the manufacturer side computer 201. The lens processing equipment 200 may either be provided in the orderer 100 such as a lens store, an ophthalmologist or the like (for example, be arranged next to the orderer 100), or be provided in a remote location. The orderer 100 is also provided with a measuring instrument for measuring visual acuity and the like of the user, and the measuring instrument may be connected to the orderer side computer 101. Further, the lens processing equipment 200 is also provided with an optical surface forming device 202, a photochromic film forming device 203 and a hard film forming device 204.

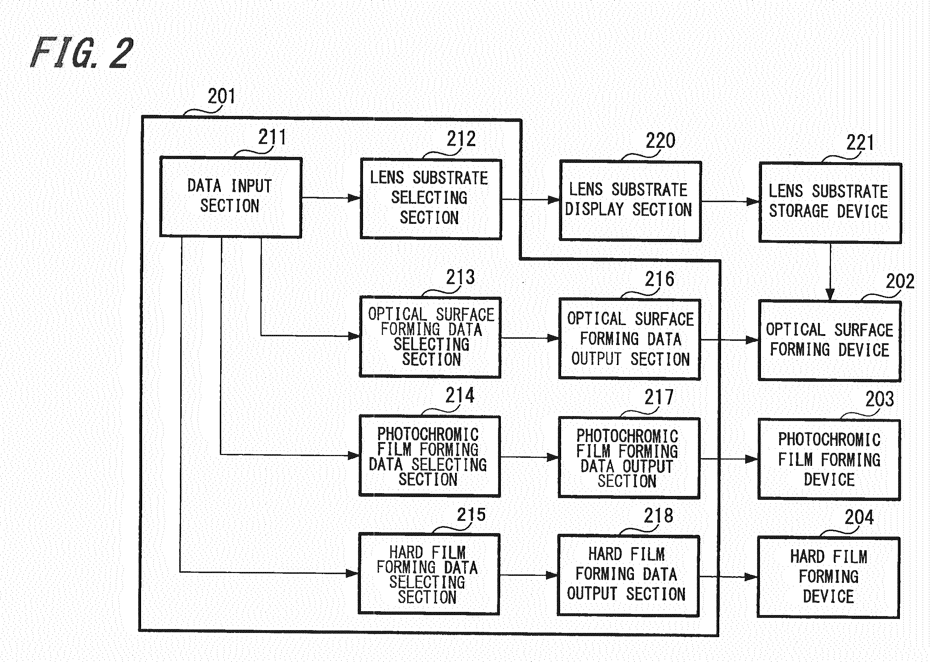

As shown in FIG. 2, the manufacturer side computer 201 includes a data input section 211, a lens substrate selecting section 212, an optical surface forming data selecting section 213, a photochromic film forming data selecting section 214, and a hard film forming data selecting section 215. The manufacturer side computer 201 further includes an optical surface forming data output section 216, a photochromic film forming data output section 217, and a hard film forming data output section 218. Communications are performed through a communication line (such as a wireless communication line or the like) so that the data outputted from the optical surface forming data output section 216 is inputted to the optical surface forming device 202, the data outputted from the photochromic film forming data output section 217 is inputted to the photochromic film forming device 203, and the data outputted from the hard film forming data output section 218 is inputted to the hard film forming device 204.

In such manufacturing system, the steps from placing order of the photochromic lens, receiving the order and manufacturing the photochromic lens on the manufacturer side, until supplying the photochromic lens to the lens store side will be described below. The same goes for the case where the lens store itself is the manufacturer. First, necessary data related to the photochromic lens is inputted to the orderer side computer 101 of the orderer 100. The inputted data includes, for example, data related to spectacle prescription, data related to the shape of the face of the user (such as the pupil distance and the like), data related to the spectacles wearing state (such as the shape of the spectacle frame), data related to the type of the lens substrate material and the like (i.e., the lens substrate material name selected according to refractive index, ultraviolet transmittance and the like, the diameter of the lens, the thickness of the lens, the base curve of the lens and the like), data related to the photochromic film, data related to the hard film, and the like. As the data related to the photochromic film, it is possible to input the color and density of the photochromic film, and time for coloring and time for fading of the photochromic film. As the data related to the hard film, it is possible to input the type of the hard film, for example.

The aforesaid data is inputted to the data input section 211 (shown in FIG. 2) of the manufacturer side computer 201 of the lens processing equipment 200 through the communication line 300. Further, lens substrate selecting data for specifying the type of the lens substrate is selected from the aforesaid data related to the type of the lens substrate material and the like. From the lens substrate selecting data, a lens substrate having suitable material, lens diameter and thickness is selected by the lens substrate selecting section 212. The type of the selected lens substrate may be outputted to, for example, a lens substrate display section 220 and the like. Based on the result, a lens substrate is selected by the lens processing equipment 200. Incidentally, in the case where a lens substrate storage device 221 is provided, the lens substrate is selected from the lens substrate storage device 221 based on such data under automatic control, and the selected lens substrate is transferred to an optical surface forming device 202 for forming a first optical surface and a second optical surface. Further, data related to the optical surface of the lens is selected based the data related to the spectacle prescription, the data related to the shape of the face, the data related to the spectacles wearing state, the data related to the substrate material of the lens, and the like. From the data related to the optical surface, optical surface forming data is selected by the optical surface forming data selecting section 213, and data necessary for optically forming both surfaces of the lens substrate is outputted from the optical surface forming data output section 216 to the optical surface forming device 202. In the optical surface forming device 202, the optical surfaces are formed by cutting and polishing based on the optical surface forming data.

On the other hand, photochromic film forming data (i.e., the type of the material of the photochromic film and the thickness of the photochromic film) is selected by the photochromic film forming data selecting section 214 based the data related to the photochromic film inputted to the data input section 211. Further, the selected data is outputted from the photochromic film forming data output section 217 to the photochromic film forming device 203. The dispensed liquid for forming the photochromic film, the revolution speed, which determines the thickness of the coated film, the coating condition such as coating time and the like, the polymerization condition (in the case where the film is cured by polymerization), and the like are selected based on the aforesaid data, and the photochromic film corresponding to the order details is formed in a spin-coating device, for example, of the photochromic film forming device 203. Incidentally, with such a manufacturing system, the photochromic film forming device 203 serves as a spin-coating device, and when controlling injection speed of the coating liquid (which is the material of the photochromic film) and when controlling a driving motor in the case where the positional relationship between the nozzle for injecting the coating liquid and the surface of the lens substrate is variable, the optical surface data related to the first optical surface (on which the photochromic film is to be formed) can be outputted to the photochromic film forming device 203 so as to be directly used as a control signal.

Further, hard film forming data of the type of the hard film corresponding to the ordered hard film is selected by the hard film forming data selecting section 215 based on the data related to the hard film inputted to the data input section 211, and the selected data is outputted from the hard film forming data output section 218 to the hard film forming device 204. The forming conditions of the hard film such as the constituent material of the hard film, the polymerization condition of the hard film and the like are inputted, and thereby a hard film corresponding to the order details is formed.

With the photochromic lens manufacturing system having the above configuration, the formation of one optical surface of the lens substrate, the formation of the photochromic film, the formation of the hard film, and the formation of the other optical surface can be achieved by a series of consecutive steps, so as to manufacture the photochromic lens.

### 2. Embodiment of photochromic lens manufacturing device

A photochromic lens manufacturing device according to an embodiment of the present invention will be described below.

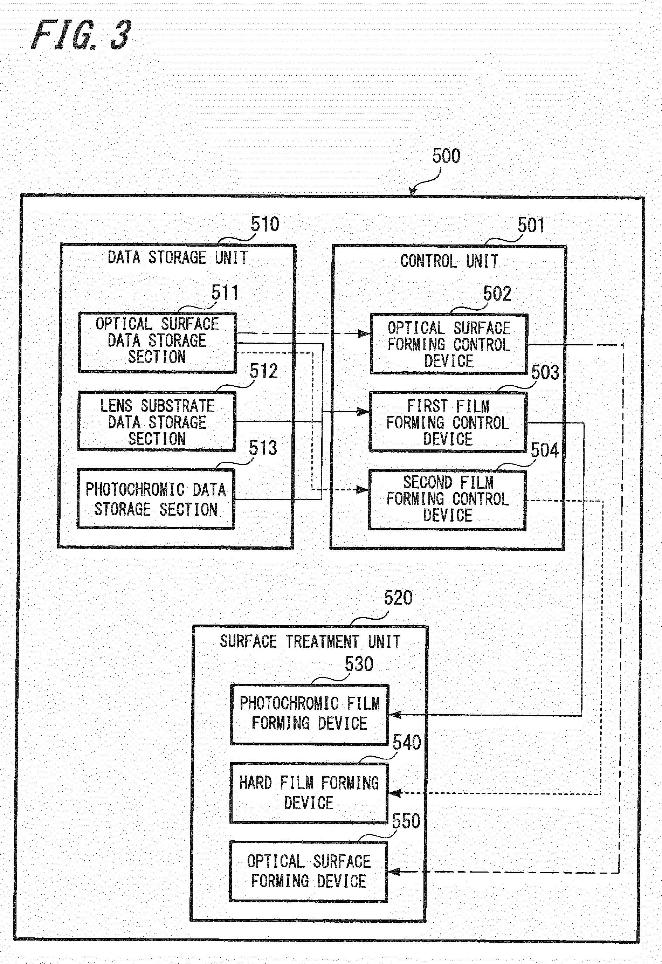

FIG. 3 is a diagram schematically showing the configuration of an example of a control system of a photochromic lens manufacturing device 500 of the present invention. The photochromic lens manufacturing device 500 includes a data storage unit 510 adapted to store information related to the lens to be manufactured, a control unit 501 adapted to control surface treatment of the lens, and a surface treatment unit 520 adapted to process the surface of the lens.

The data storage unit 510 includes an optical surface data storage section 511, a lens substrate data storage section 512, and a photochromic data storage section 513, wherein the optical surface data storage section 511 is adapted to store dimension data such as the curve data of the surface-to-be-coated, the diameter of the lens and the like, the lens substrate data storage section 512 is adapted to store material data related to the material of the lens substrate and outermost layer material data indicating whether a hard film is to be coated on the surface-to-be-coated, and the photochromic data storage section 513 is adapted to input photochromic performance such as color tone and density of the photochromic film to be formed.
The control unit 501 includes an optical surface forming control device 502, a first film forming control device 503 and a second film forming control device 504, wherein the optical surface forming control device 502 is adapted to take out necessary data from the data storage unit 510 to calculate the condition to perform forming control of the optical surface, the first film forming control device 503 is adapted to take out necessary data from the data storage unit 510 to calculate the condition to perform film-forming control of the photochromic film, and the second film forming control device 504 is adapted to take out necessary data from the data storage unit 510 to calculate the condition to perform film-forming control of the hard film.
The surface treatment unit 520 includes a photochromic film forming device 530 for forming the photochromic film (i.e., a photochromic film forming means), a hard film forming device 540 for forming the hard film (i.e., a hard film forming means), and an optical surface forming device 550 for forming the first optical surface and second optical surface.
Each unit will be described below in more details.

The data storage unit 510 is adapted to allow the operator to input information of the order received from the user, and store such information. Among the information, the data about the lens shape is stored in the optical surface data storage section 511. As concrete data, the lens base curve data of the lens, the lens external shape data, the lens thickness data and the like are required to be stored. Further, if the lens is a progressive-addition lens, there is a possibility that the curvature of the curved surface at the near power center is different from the curvature of the curved surface at the distance power center. In the case where the lens has such a shape, three-dimensional data of the curved surface will be stored.
The material data and the outermost layer material data are stored in the lens substrate data storage section 512. The refractive index of the plastic lens is dependent on the material of the lens substrate. The material of the hard film is determined based on the refractive index; and in the case where an antireflection film is to be formed, the constriction of the antireflection film is also determined based on the refractive index. The material data is important element for performing film-forming control of the hard film, and the like.
Further, the outermost layer material data is indispensable element for forming the photochromic film. It is necessary to set different conditions between the case where a hard film is to be coated on the outermost surface and the case where no hard film is to be coated on the outermost surface. The outermost layer material data is important element for performing film-forming control of the photochromic film.
Information related to design of the photochromic film desired by the user, such as the color tone, the density and the like when coloring, is stored in the photochromic data storage section 513.

The control unit 501 includes the optical surface forming control device 502 for performing optical surface forming control of the first and second optical surfaces, the first film forming control device 503 for performing film-forming control of the photochromic film and the second film forming control device 504 for performing film-forming control of the hard film. The optical surface forming control device 502 controls the optical surface forming device 550 of the surface treatment unit 520 (corresponding to the optical surface forming device 202 shown in FIG. 2) based on the optical surface data and the lens substrate data of the lens to be manufactured stored in the data storage unit 510. Similarly, the first film forming control device 503 controls the photochromic film forming device 530 of the surface treatment unit 520 (corresponding to the photochromic film forming device 203 shown in FIG. 2) based on the optical surface data, the lens substrate data and the photochromic data stored in the data storage unit 510. The details of the control method will be described below when describing the details of the photochromic film forming device 530. The second film forming control device 504 included in the control unit 501 controls the hard film forming device 540 (corresponding to the hard film forming device 204 shown in FIG. 2) based on the lens substrate data and the optical surface data stored in the data storage unit 510.

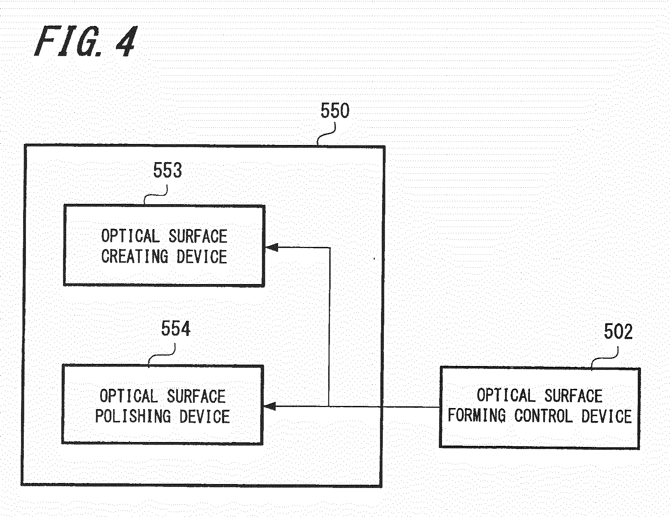

Next, the optical surface forming device 550 included in the surface treatment unit 520 will be described below. The formation of the first and second optical surfaces is performed by the optical surface forming device 550 based on a control signal outputted from the optical surface forming control device 502. FIG. 4 is a diagram showing the configuration of an example of the optical surface forming device 550. The optical surface forming device 550 includes an optical surface creating device 553 and an optical surface polishing device 554. The operation condition of the optical surface creating device 553 and the operation condition of the optical surface polishing device 554 are respectively set by the optical surface forming control device 502, and thereby the optical surface creating device 553 and the optical surface polishing device 554 are controlled by the optical surface forming control device 502. Based on the shape data and the like of the lens stored in the optical surface data storage section 511 of the data storage unit 510, the optical surface forming control device 502 sets an optical surface cutting condition, outputs a control signal for cutting/creating optical surface to the optical surface creating device 553, and outputs a control signal for mirror polishing the cut surface to the optical surface polishing device 554. The details of the optical surface creating device 553 and the optical surface polishing device 554 will be described later when describing the embodiment of the photochromic lens manufacturing method.

Incidentally, the optical surface forming control device 502 may also select the type of the lens substrate based on the lens substrate data stored in the lens substrate data storage section 512 of the data storage unit 510. In such a case, it is preferred that a control signal for selecting the lens substrate is outputted from the optical surface forming control device 502 to a lens substrate storage device (not shown in the drawings), and a lens substrate of the selected type (material and lens diameter) is transferred from the lens substrate storage device to the optical surface forming device 550 under automatic control. Further, it is preferred that a transfer means for transferring lens from the optical surface forming device 550 to the photochromic film forming device 530 (or a transfer means for transferring lens between the optical surface forming device 550 and the photochromic film forming device 530), a transfer means for transferring lens from the photochromic film forming device 530 to the hard film forming device 540, and a transfer means for transferring lens from the hard film forming device 540 to the optical surface forming device 550 (or a transfer means for transferring lens between the hard film forming device 540 and the optical surface forming device 550) are provided.

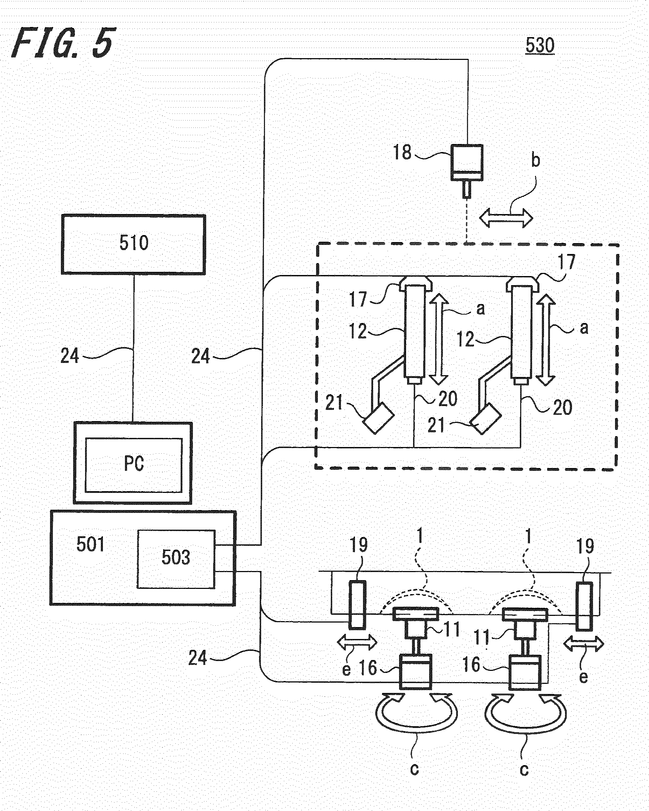

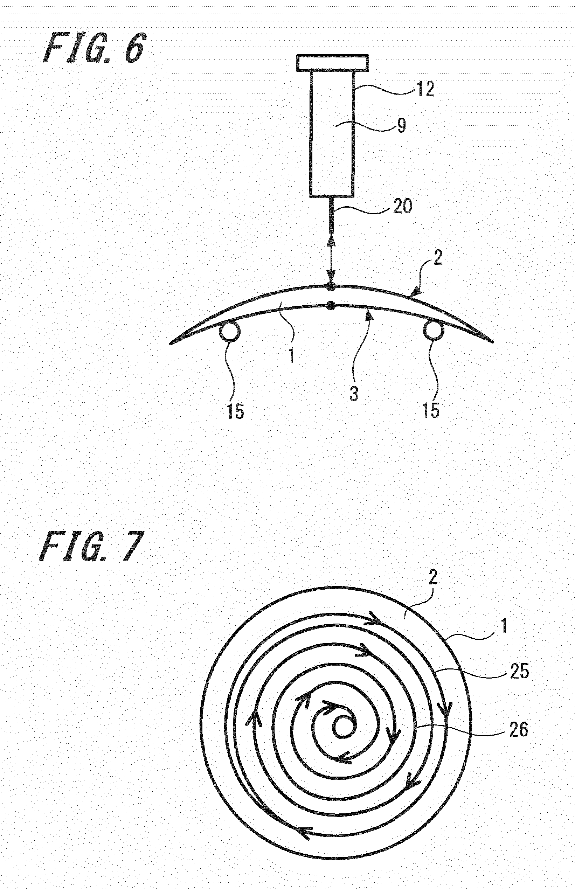

Next, the details of the photochromic film forming device 530 included in the surface treatment unit 520 will be described below. FIG. 5 is a view showing the schematic configuration of an example of the photochromic film forming device 530, and FIG. 6 is an enlarged view schematically showing the configuration of a primary portion of the photochromic film forming device 530.

The photochromic film forming device 530 shown in FIGS. 5 and 6 includes a spin holder 11 for holding a lens substrate 1, and a dispenser 12, which serves as a dropping device for dropping a coating liquid 9 onto a surface-to-be-coated 2, which is the convex surface of the lens substrate 1 (see FIG. 6). The photochromic film forming device 530 is connected to the first film forming control device 503 of the control unit 501, and the first film forming control device 503 is connected to the data storage unit 510 through a communication line 24 (such as a communication cable, a wireless LAN communication line or the like), wherein the data storage unit 510 has the optical surface data of the lens substrate 1 stored therein.

The coating liquid 9 to be injected into the dispenser 12 is selected based on the photochromic data and the lens substrate data stored in the data storage unit 510. The coating liquid 9 is selected or prepared based on both the design property of the ordered photochromic film (such as the color tone, the density, and the coloring/fading rate) and the information about the surface-to-be-coated 2. The condition of the coating liquid 9 is derived by the first film forming control device 503, and the coating liquid 9 is selected or prepared by the photochromic film forming device 530 or the operator according to the derived condition.

As shown in FIG. 6, the surface of the lens substrate 1 as the surface-to-be-coated 2 is formed in a curved shape convexed upward (i.e., convex surface shape) for example. Further, an O-ring 15 (see FIG. 6) of the spin holder 11 (see FIG. 5) is brought into contact with a rear surface 3 of the lens substrate 1 formed in concave surface shape, for example. By providing the spin holder 11 with an exhaust means (not shown in the drawings), the lens substrate 1 is absorbed so as to be held by the spin holder 11 with the O-ring 15 due to the negative pressure. On the other hand, as shown in FIG. 5, at least one dispenser 12 is provided corresponding to the lens substrate 1. FIG. 5 shows an example in which two dispensers 12 are provided, however the present invention is not limited thereto. The dispenser 12 is arranged so as to be able to be moved up and down under the drive of a dispenser motor 17 with respect to the lens substrate 1 held by the spin holder 11 along, for example, the vertical direction indicated by arrow "a" shown in FIG. 5. The dispenser 12 is arranged so as to be able to be moved along, for example, the horizontal direction of a diametrical direction (indicated by arrow "b" shown in FIG. 5) of the lens substrate 1 held by the spin holder 11 under the drive of a slide motor 18. The spin holder 11 is arranged so as to be able to be rotated along arrow "c" shown in FIG. 5 under the drive of a spin motor 16. Further, the spin holder 11 may also be arranged so as to be able to be moved along, for example, the horizontal direction indicated by arrow "e" shown in FIG. 5 under the drive of a slide motor 19.

The spin motor 16, the dispenser motor 17, and the slide motors 18 and 19 are connected to the first film forming control device 503 through the communication line 24, so that the operations of the spin motor 16, the dispenser motor 17, and the slide motors 18 and 19 are controlled. Further, the dispenser 12 is provided with a cylinder motor 21, and the cylinder motor 21 is connected to the first film forming control device 503 through the communication line 24 in the same manner, so that the operation of the cylinder motor 21 is controlled. Thus, the amount of the coating liquid 9 dropped from the dispenser 12 is controlled according to the viscosity of the coating liquid 9.

The coating liquid 9, which is a kind of liquid having photochromic function (i.e., its color changes when being irradiated with the light containing ultraviolet ray), has higher viscosity than general coating liquid, and the viscosity of the coating liquid 9 is 25 cps to 500 cps at 25°C. By using the photochromic film forming device 530 having the above configuration, even the coating liquid 9 having high viscosity can be coated onto the convex shaped surface-to-be-coated 2 (see FIG. 6) of the lens substrate 1 with a film thickness of several tens of µm (for example, 30µm), and therefore it is possible form a photochromic film having less unevenness in thickness (not shown in the drawings).

Incidentally, even in the case where the first optical surface (i.e., the surface-to-be-coated 2 of the lens substrate 1) is a complex curved surface, such as a progressive-addition lens, by using the optical surface data related to the first optical surface transmitted from the optical surface forming control device 502 in its entirety also in the first film forming control device, and controlling the spin motor 16, the dispenser motor 17, and the slide motors 18 and 19 based on the optical surface data, the film thickness can be controlled with high accuracy to form the photochromic film.

The photochromic film is coated onto the convex shaped surface-to-be-coated 2 of the lens substrate 1 using the photochromic film forming device 530 under the control of the first film forming control device 503. The concrete control is achieved by holding the lens substrate 1 to the spin holder 11, and dropping the coating liquid 9, which contains the photochromic pigment and the like, from a nozzle 20 of the dispenser 12 while rotating the spin holder 11. During the period, the nozzle 20 of the dispenser 12 is linearly moved from the vicinity of the periphery of the lens substrate 1 toward the geometrical center or optical center of the lens substrate 1 in a state where the nozzle 20 does not contact the lens substrate 1. By the notation of the lens substrate 1 caused by the spin holder 11 and the movement of the nozzle 20, the coating liquid 9 is spirally dropped onto the surface-to-be-coated 2. Incidentally, it is also possible to form a ring-like dropping trajectory 25 near the periphery, and form a spiral dropping trajectory 26 on the inner side as shown in FIG. 7. By forming the photochromic film in this manner, it is possible to form a photochromic film having uniform film thickness even if the coating is performed using the coating liquid 9 having high viscosity.
The movement trajectory of the nozzle 20 of the dispenser 12 when the coating liquid 9 is being dropped onto the surface-to-be-coated 2 of the lens substrate 1 is determined by the first film forming control device 503 based on the shape data (i.e., the dimension data and the surface shape data) of the lens substrate 1 stored in the data storage unit 510.

Next, the photochromic film forming device 530 drives the spin motor 16 to rotate the spin holder 11. Due to the rotation of the spin holder 11, the coating liquid 9 is smoothed on the surface-to-be-coated 2. Conditions such as rotation speed, rotation time and the like are set and controlled by the first film forming control device 503 based on the lens substrate data (such as material data) and the dimension data of the optical surface stored in the data storage unit 510. The rotation speed may either be a constant value from beginning to end, or be set to a plurality of levels.

After the smoothing process is completed, the lens substrate 1 is released from the spin holder 11. The lens substrate 1 is transferred to a drying step by a transfer device. Incidentally, in the drying step, the photochromic film coated on the surface-to-be-coated 2 of the lens substrate 1 is cured and dried by ultraviolet light irradiation in a nitrogen atmosphere. The thermal property of the substrate material, the optimal wavelength of the ultraviolet for polymerising the photochromic film, the irradiation time and the like are set as the drying condition. Thus, such condition is set and controlled by the first film forming control device 503 based on the lens substrate data (i.e., the material) and the photochromic data (i.e., the coating liquid and the like).

Thereafter, in the case where the hard film is formed after an optical surface is formed on the other surface, the lens substrate 1 will be transferred again to the optical surface forming device 550 where the second optical surface is formed. After the second optical surface forming step is completed, or in the case where the hard film is to be formed immediately after the photochromic film has been formed, the hard film is formed.
First, based on the substrate material data stored in the data storage unit 510, the second film forming control device 504 for controlling the film forming of the hard film derives a coating liquid (i.e., a hard coat liquid) possible to be used to form a film having a refractive index near to that of the substrate. The derived hard coat liquid is selected or prepared by the hard film forming device 540 or the operator. Further, the hard film is formed by the coating device included in the hard film forming device 540.

The setting of the condition of the coating and the control of the hard film forming device 540 are performed by the second film forming control device 504. If a dipping method is used by the coating device included in the hard film forming device 540, the second film forming control device 504 sets the dipping time of the lens substrate, the drawing speed, the drying condition, the curing condition and the like, and controls the hard film forming device 540 based on the set conditions. If a spin-coating method is used by the coating device, the second film forming control device 504 sets the coating liquid feeding condition and the rotation condition during coating, the drying condition, the curing condition and the like, and controls the hard film forming device 540 based on the set conditions.

Thereafter, in the case where the second optical surface is to be formed after the hard film has been formed, the lens substrate 1 is transferred again to the optical surface forming device 550 where cutting or polishing process for forming optical surface is performed.

With the photochromic lens manufacturing device 500 having the aforesaid configuration, the selection of the lens substrate, the formation of the photochromic film, the formation of the hard film can be performed even by an operator having no particular knowledge about the coating of the photochromic film and the like. Further, even in the case where a semi-finished lens is selected as the lens substrate, the formation of the photochromic film, the formation of the optical surface, and the formation of the hard film can be performed as a series of consecutive steps; or a photochromic lens can be manufactured by performing the formation of the photochromic film, the formation of the optical surface, and the formation of the hard film as a series of consecutive steps.

### 3. Embodiment of photochromic lens manufacturing method

Next, a photochromic lens manufacturing method according to an embodiment of the present invention will be described below.

### [1] Material of photochromic lens

First, the materials of the lens substrate, the photochromic film and the hard film applicable to the photochromic lens manufacturing method of the present invention will be described below.

### (1) Lens substrate

A lens substrate capable of forming two optical surfaces (i.e., a lens substrate having a diameter and thickness including sufficient cutting margin) may be used as the lens substrate applicable to the photochromic lens manufacturing method of the present invention. The material, the manufacturing method and the like of the lens substrate are not particularly limited, but can be suitably selected according to prescription of the order.

Examples of the material of the lens substrate include copolymer of methyl methacrylate and at least one other monomer, copolymer of diethylene glycol bisallyl carbonate and at least one other monomer, copolymer of polyurethane and polyurea, polycarbonate, polystyrene, polyvinyl chloride, unsaturated polyester, polyethylene terephthalate, polyurethane, polythiourethane, sulfide resin obtained by utilizing an ene-thiol reaction, sulfur-containing vinyl polymer and the like. Various kinds of additives may be added into these materials according to necessity. Further, injection molding, cast molding and the like can be selected as the forming method of the lens substrate prior to cutting/polishing process in accordance with the material.

### (2) Coating liquid of photochromic film

The photochromic film is formed by coating a coating liquid containing photochromic figment onto one surface of the lens substrate (for example, the convex-side surface where an optical surface has been formed) and curing the coated liquid.
The coating liquid may be composed of curable component , photochromic pigment, polymerization initiator, and additives arbitrarily added. The coating liquid is not limited to be prepared by a particular preparation method, but can be prepared by measuring off a predetermined amount of each component, and mixing up the respective components. Incidentally, the order of adding the respective components is not particularly limited. For example, the all components may be added at the same time, or monomer component may be previously mixed and then the photochromic pigment and other additives are added and mixed immediately before polymerisation.
It is preferred that the viscosity of the coating liquid is 20cp to 500cp at 25°C, more preferred that the viscosity of the coating liquid is 50cp to 300cp, and particularly preferred that the viscosity of the coating liquid is 60cp to 200cp. By controlling the viscosity in this range, the coating liquid can be easily coated, and the photochromic film of the desired thickness can be easily obtained.
Details of each component of the coating liquid will be described below.

### (2-1) Curable component

The curable component possible to be used for forming the photochromic film is not particularly limited. Examples of the material of the curable component include known photopolymerizable monomer and oligomer having radical polymerizable group such as (meth)acryloyl group, (meth)acryloyloxy group, vinyl group, allyl group, styryl group, and prepolymers of the photopolymerizable monomers and oligomers. Among these compounds, the compound having acryloyl group or (meth)acryloyloxy group (as the radical polymerizable group) is preferably used due to their availability and good curability. Incidentally, the "(meth)acryloyl group" represents both the acryloyl group and the methacryloyl group.
The components described in Japanese Unexamined Patent Application Publication No. 2008-33223, Japanese Unexamined Patent Application Publication No. 2007-77327 and the like can be used as concrete curable component.

### (2-2) Photochromic pigment compound

The photochromic pigment compound can be a known photochromic pigment compound. Examples of the photochromic pigment compound include fulgimide compound, spirooxazine compound, chromene compound and the like, and in the present invention, these photochromic pigment compounds can be used without particular limitation.
For example, the compounds described in Japanese Unexamined Patent Application Publication No. H02-28154, Japanese Unexamined Patent Application Publication No. S62-288830, description of WO94/22850, description of WO96/14596 and the like can be preferably used as the aforesaid fulgimide compound, spirooxazine compound, chromene compound.
For example, the compounds described in Japanese Unexamined Patent Application Publication No. 2001-114775, Japanese Unexamined Patent Application Publication No. 2001-031670, Japanese Unexamined Patent Application Publication No. 2001-011067, Japanese Unexamined Patent Application Publication No. 2001-011066, Japanese Unexamined Patent Application Publication No. 2000-347346, Japanese Unexamined Patent Application Publication No. 2000-344762, Japanese Unexamined Patent Application Publication No. 2000-344761, Japanese Unexamined Patent Application Publication No. 2000-327676, Japanese Unexamined Patent Application Publication No. 2000-327675, Japanese Unexamined Patent Application Publication No. 2000-256347, Japanese Unexamined Patent Application Publication No. 2000-229976, Japanese Unexamined Patent Application Publication No. 2000-229975, Japanese Unexamined Patent Application Publication No. 2000-229974, Japanese Unexamined Patent Application Publication No. 2000-229973, Japanese Unexamined Patent Application Publication No. 2000-229972, Japanese Unexamined Patent Application Publication No. 2000-219687, Japanese Unexamined Patent Application Publication No. 2000-219686, Japanese Unexamined Patent Application Publication No. 2000-219685, Japanese Unexamined Patent Application Publication No. H11-322739, Japanese Unexamined Patent Application Publication No. H11-286484, Japanese Unexamined Patent Application Publication No. H11-279171, Japanese Unexamined Patent Application Publication No. H10-298176, Japanese Unexamined Patent Application Publication No. H09-218301, Japanese Unexamined Patent Application Publication No. H09-124645, Japanese Unexamined Patent Application Publication No. H08-295690, Japanese Unexamined Patent Application Publication No. H08-176139, Japanese Unexamined Patent Application Publication No. H08-157467 and the like can be preferably used as the compound having excellent photochromic property.

Among the examples of the photochromic pigment compound described above, the chromene photochromic pigment compound is preferably used due to its better photochromic durability, higher color density and higher fading rate of the photochromic property, compared with other photochromic pigment compounds. Further, among the chromene photochromic pigment compounds, the chromene photochromic pigment compound having a molecular weight of 540 or higher is preferably used due to its higher color density and higher fading rate of the photochromic property, compared with other chromene photochromic pigment compounds.

Further, it is preferred that material expressed by the following formula (1) is used as a chromene compound having particularly good photochromic properties such as color density, fading rate, photochromic durability and the like.

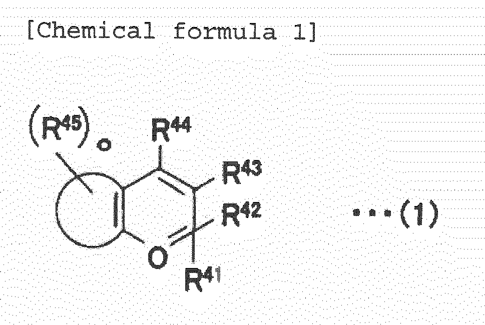

In formula 1, the group expressed by the following formula (2) is a substituted or unsubstituted aromatic hydrocarbon group, or a substituted or unsubstituted unsaturated heterocyclic group.

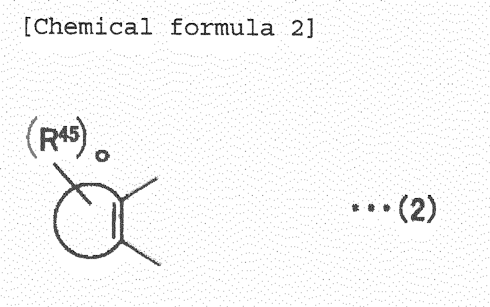

In formula (1) , R⁴³, R⁴⁴, and R⁴⁵ are respectively and independently a hydrogen atom, an alkyl group, an alkoxyl group, an aralkoxy group, an amino group, a substituted amino group, a cyano group, a substituted or unsubstituted aryl group, a halogen atom, an aralkyl group, a hydroxyl group, a substituted or unsubstituted alkynyl group, a substituted or unsubstituted heterocyclic group having a nitrogen atom as a heteroatom that binds to a pyran ring or a ring of the group expressed by formula (2), or a condensation heterocyclic group generated by condensing an aromatic hydrocarbon ring or an aromatic heterocycle into the heterocyclic group. Further, "o" is an integer of 0 to 6.

In formula (1), R⁴¹ and R⁴² are respectively and independently a group expressed by the following formula (3), a group expressed by the hollowing formula (4), a substituted or unsubstituted aryl group, a substituted or unsubstituted heteroaryl group, or an alkyl group, or R⁴¹ and R⁴² may together constitute an aliphatic hydrocarbon ring or an aromatic hydrocarbon ring.

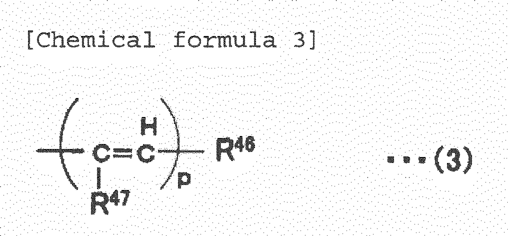

(where R⁴⁶ represents a substituted or unsubstituted aryl group, or a substituted or unsubstituted heteroaryl group, R⁴⁷ represents a hydrogen atom, an alkyl group, or a halogen atom, and p represents an integer of 1 to 3.)

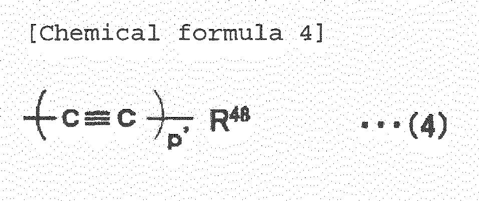

(where R⁴⁸ represents a substituted or unsubstituted aryl group, or a substituted or unsubstituted heteroaryl group, and p' represents an integer of 1 to 3.)

Incidentally, examples of the substituent of the substituted aryl group and the substituted heteroaryl group mentioned when describing formulas (3), (4), R⁴¹ and R⁴² include the same groups as R⁴³ to R⁴⁴.

Even in the chromene compounds expressed by formula (1), the compounds expressed by formulas (5) to (10) are particularly preferred to be used in view of photochromic properties (such as color density, fading rate and the like) and durability.

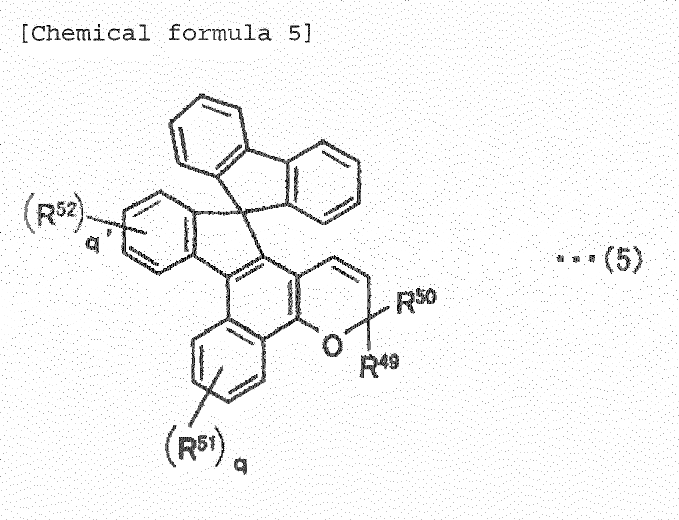

(where R⁴⁹ and R⁵⁰ are respectively identical to R⁴¹ and R⁴² of general formula (1), R⁵¹ and R⁵² are identical to R⁴⁵ of general formula (1), and q and q' are respectively integers 1 to 2)

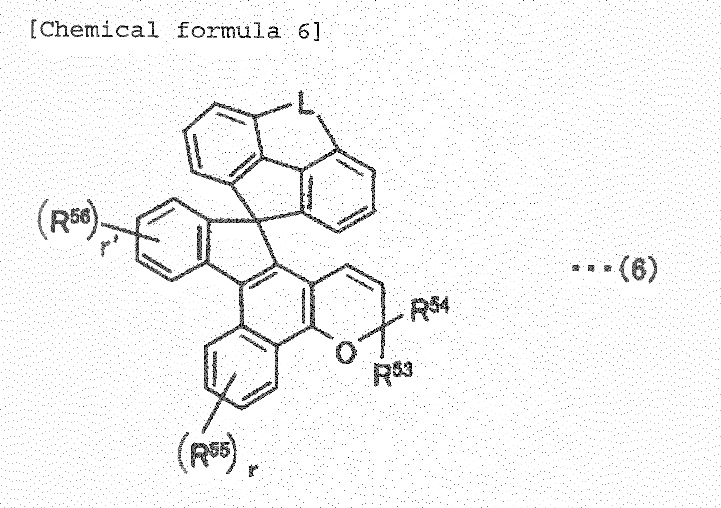

(where R⁵³ and R⁵⁴ are respectively identical to R⁴¹ and R⁴² of formula (1), R⁵⁵ and R⁵⁶ are identical to R⁴⁵ of formula (1), L represents either of the groups expressed by the following formulas, and r and r' are respectively and independently 1 or 2) 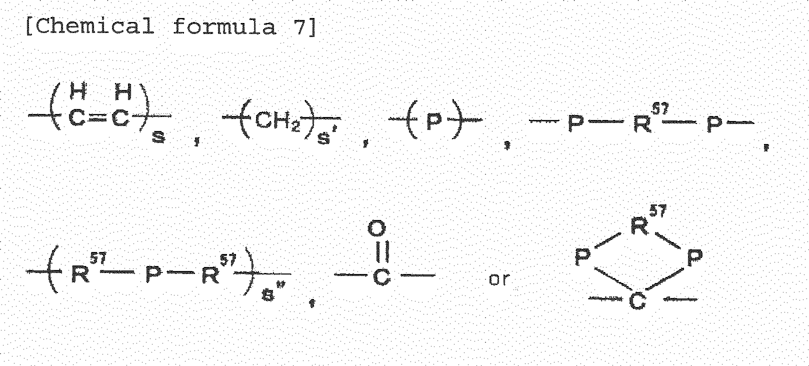 (where P represents an oxygen atom or a sulfur atom, R⁵⁷ represents an alkylene group having 1 to 6 carbon atoms, s, s' and s" are each an integer of 1 to 4)

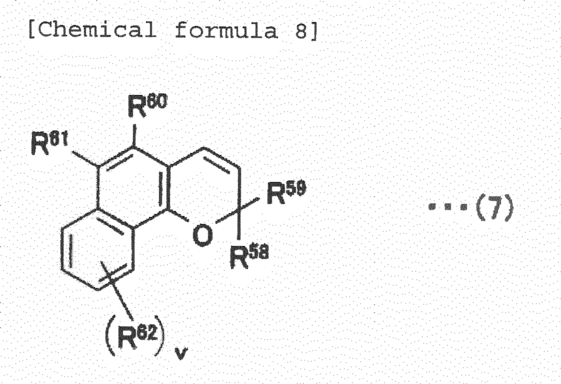

(where R⁵⁸ and R⁵⁹ are respectively identical to R⁴¹ and R⁴² of formula (1), R⁶⁰, R⁶¹ and R⁶² are each identical to R⁴⁵ of formula (1), and v is 1 or 2)

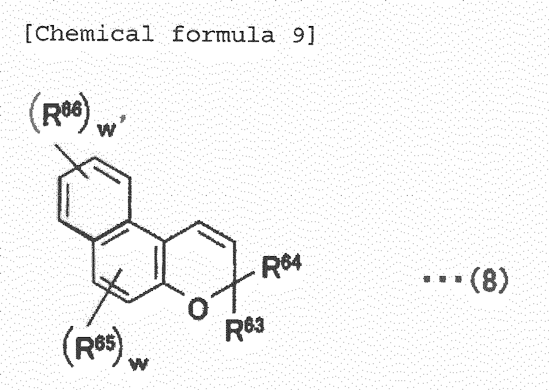

(where R⁶³ and R⁶⁴ are respectively identical to R⁴¹ and R⁴² of formula (1), R⁶⁵ and R⁶⁶ are each identical to R⁴⁵ of general formula (1), and w and w' are respectively and independently 1 or 2)

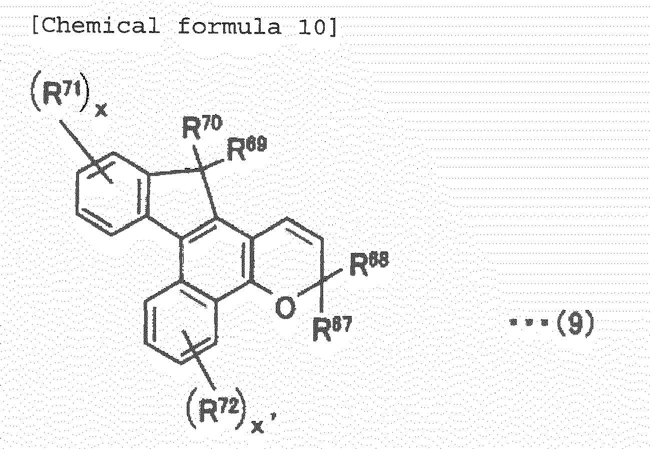

(where R⁶⁷ and R⁶⁸ are respectively identical to R⁴¹ and R⁴² of formula (1), R⁶⁹, R⁷⁰, R⁷¹ and R⁷² are each identical to R⁴⁵ of formula (1), and x and x' are respectively and independently 1 or 2)

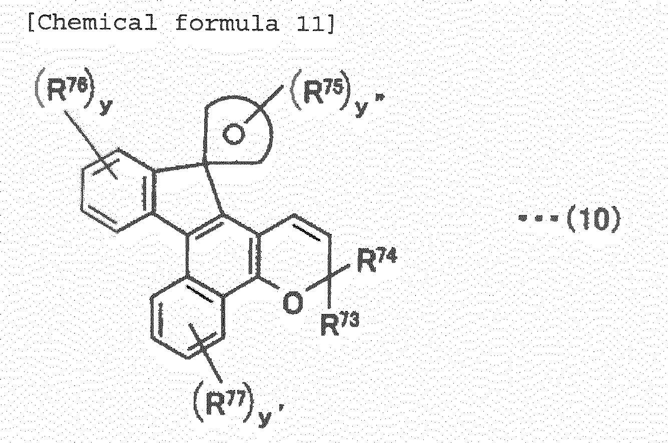

(where R⁷³ and R⁷⁴ are respectively identical to R⁴¹ and R⁴² of formula (1), R⁷¹, R⁷⁶ and R⁷⁷ are each identical to R⁴⁵ of formula (1), and the portion expressed by the hollowing formula represents an aliphatic hydrocarbon ring that may has at least one substituent, and y, y' and y" are respectively and independently 1 or 2)

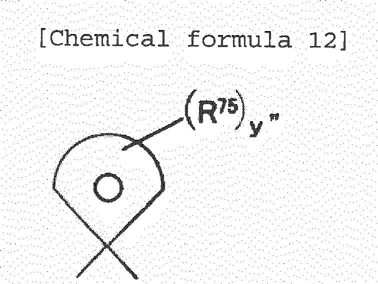

Among the chromene compounds expressed by formulas (5) to (10), a chromene compound having the following structure is particularly preferred.

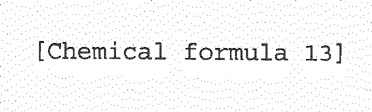

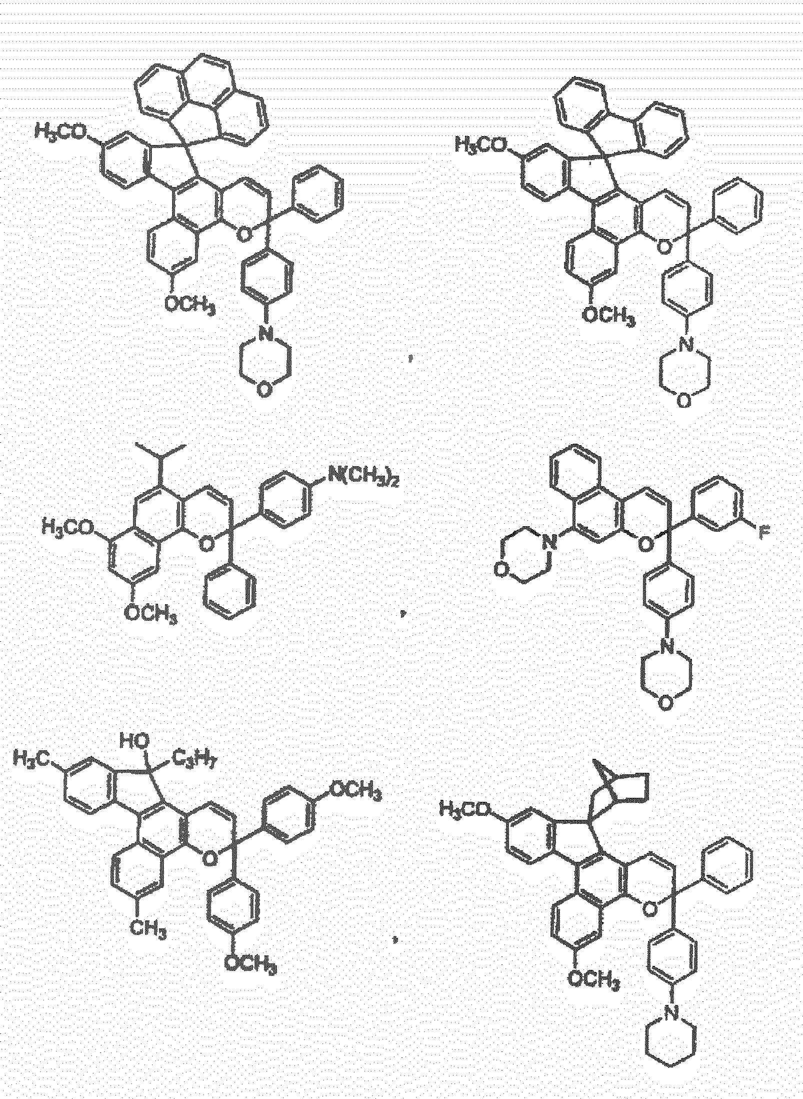

In order to find suitable color tone, these photochromic pigment compound can be used in suitable combination of two or more thereof. Content of the photochromic pigment compound based on the total amount of the curable composition is usually 0.01-20 pts. wt., preferably 0.1-10 pts. wt. based on 100 pts. wt. of the radical polymerizable monomer.

### (2-3) photopolymerization initiator

The photopolymerization initiator is not particularly limited. Examples of the photopolymerization initiator include benzoin, benzoin methyl ether, benzoin butyl ether, benzophenol, acetophenone, 4,4'-dichlorobenzophenone, diethoxyacetophenone, 2-hydroxy-2-methyl-1-phenylpropane-1-one, benzylmethylketal, 1-(4-isopropylphenyl)-2-hydroxy-2-methylpropane-1-one, 1-hydroxycyclohexyl phenyl ketone, 2-isopropylthioxanthone, bis(2,6-dimethoxybenzoyl-2,4,4-trimethyl-pentylphosphine oxide, bis(2,4,6-trimethylbenzoyl)-phenylphosphine oxide, 2,4,6-trimethylbenzoyldiphenyl-phosphineoxide, and 2-benzyl-2-dimethylamino-1-(4-morpholinophenyl)-butanone-1. Among these examples, 1-hydroxycyclohexyl phenyl ketone, 2-isopropylthioxanthone, bis(2,6-dimethoxybenzoyl-2,4,4-trimethyl-pentylphosphine oxide, bis(2,4,6-trimethylbenzoyl)-phenylphosphine oxide, 2,4,6-trimethylbenzoyldiphenyl-phosphineoxide are preferably selected.
These photopolymerization initiators can be used in suitable combination of two or more thereof. Content of the photopolymerization initiator of component (6) based on the total amount of the curable composition is usually 0.001-5 pts. wt., preferably 0.1-1 pts. wt. based on 100 pts. wt. of the radical polymerizable monomer.

Incidentally, in the case where curing is achieved by other method than photopolymerization, thermal polymerisation initiator for, example, may be a diacyl peroxide, a peroxy ester, a percarbonate, an azo compound or the like. Examples of the diacyl peroxide include benzoyl peroxide, p-chlorobenzoyl peroxide, decanoyl peroxide, lauroyl peroxide, acetyl peroxide and the like; examples of the peroxy ester include t-butylperoxy-2-ethylhexanoate, t-butyl peroxydicarbonate, cumyl peroxydecanoate, t-butyl peroxybenzoate and the like; examples of the percarbonate include diisopropyloxy dicarbonate, di-2-ethylhexyl peroxydicarbonate, di-sec-butyl peroxydicarbonate and the like; examples of the azo compound include 2,2' azobisisobutyronitrile, 2,2' azobis(4-dimethylvaleronitrile), 2,2' azobis(2-methylbutyronitrile), 1,1' azobis(cyclohexane-1-Carbonitrile) and the like.

The amount of the thermal polymerization initiator to be used varies according to the polymerization condition, the type of the thermal polymerisation initiator, and the type and composition of the polymerizable monomer. The amount of the thermal polymerisation initiator to be used is usually controlled to 0.01-10 pts. wt. based on 100 pts. wt. of the total polymerizable monomer. The thermal polymerisation initiator may be used by one kind alone, or two or more kinds of thermal polymerisation initiators may be used in combination.

### (2-4) Additive

In order to improve the photochromic durability, the coloring rate, the fading rate and moldability, the liquid may further contain various additives such as surfactant, antioxidant, radical-capturing agent, ultraviolet stabilizer, ultraviolet absorber, mold release agent, color protection agent, antistat, fluorescent dye, dye, pigment, fragrance, plasticizer and the like. Known compounds may be used as these additives without any limitation.

Anionic surfactants, nonionic surfactants and cationic surfactants can be used as the aforesaid surfactant. However, considering the solubility to the coating liquid, it is preferred that a nonionic surfactant is used as the aforesaid surfactant.

A hindered amine light stabilizer, a hindered phenolic antioxidant, a phenolic radical-capturing agent, a sulfur antioxidant, a benzotriazole compound, a benzophenone compound and the like may be preferably used as the antioxidant, the radical-capturing agent, the ultraviolet stabilizer and the ultraviolet absorber. The antioxidant, the radical-capturing agent, the ultraviolet stabilizer and the ultraviolet absorber may also be use in combination of two or more thereof. Further, when using these nonpolymerizable compounds, the surfactant can be used in combination with the antioxidant, the radical-capturing agent, the ultraviolet stabilizer and the ultraviolet absorber.
Among the stabilizers, the hindered amine light stabilizer is preferred to be used from the standpoint of preventing deterioration of the photochromic pigment during curing process or improving durability of the obtained photochromic film. Know compounds may be used as the hindered amine light stabilizer without any limitation.

Further, in order to improve uniformity when forming film, it is preferred that surfactant, leveling agent and the like are added into the coating liquid, and it is particularly preferred that silicone leveling agent or fluorine leveling agent having leveling property is added into the coating liquid.

Further, in order to improve adhesion, an adherence agent such as a coupling agent, or a polymerisation catalyst of coupling agent may also be added into the coating liquid.

### (3) Photochromic film: foundation layer

It is preferred that a foundation layer is formed between the lens substrate and the photochromic film. The foundation layer can be formed by using polyurethane resin, polyester resin, epoxy resin, melamine resin, or polyurethane acrylate resin. The method for forming the foundation layer is not particularly limited. The foundation layer may be formed by preparing a coating liquid capable of forming the foundation layer, coating the coating liquid onto the convex surface of the lens substrate, and then curing the coated coating liquid. The coating method is not particularly limited. A dipping method or a spin method may be used as the coating method; however, since the photochromic film is formed on one surface only, it is preferred that a spin method, which can be used to form a film on one surface only, is used.
The thickness of the foundation layer is not particularly limited as long as the thickness is a value that improves the joining state between the convex surface of the lens substrate and the photochromic film. The film thickness is preferably set to 1µm to 20µ, and more preferably set to 3µm to 10µm. If the film thickness is less than 0.5µm, adhesion between the photochromic film and the convex surface will be difficult to achieve. While if the film thickness exceeds 25µm, the film structure including the photochromic film will be soft.

Further, a material layer composed of a silica-based inorganic material, an acrylic resin or the like may be formed in the lower layer or upper layer of the foundation layer (i.e., between the lens substrate and the foundation layer or between the foundation layer and the photochromic film). During the formation of the photochromic film by thermal polymerisation or photopolymerization, there is a possibility that a part of components of the photochromic film material might be moved to the foundation layer and the lens substrate. Thus, a silica-based inorganic material layer capable of restraining such component moving may be formed before or after forming the foundation layer. Or an organic material layer, such as an acrylic resin layer, capable of absorbing such components may be formed. Since these materials, along with the foundation layer and the photochromic film, are formed as a series of steps, it is preferred that the film of these materials is formed by a coating method, such as a spin-coating method or the like, and the coated material is cured by heating, ultraviolet light irradiation or the like.

Further, the material layer, such as the silica-based inorganic material, the acrylic resin or the like, may also be formed after the photochromic film has been formed. A hard film, which is to be described later, is formed on the photochromic film. However, there is possibility the components with low molecular weight, such as light stabilizer and the like, in the photochromic film might be moved into the hard film during the polymerisation process when forming the hard film. By forming the aforesaid material layer between the photochromic film and the hard film, it is possible to prevent such unnecessary components from being mixed into the hard film.

### (4) Hard film

In the present invention, a hard coat layer (as the hard film) is formed on the photochromic film. The material of the hard coat layer is not particularly limited, but can be a know coating liquid containing organosilicon compound sand colloidal particle of metal oxide. The hard coat layer can be obtained by coating the coating liquid and then perform a curing process on the coating.
Examples of the organosilicon compound include, for example, an organosilicon compound represented the following formula (I) or a hydrolysate thereof.

[Chemical formula 14] (R⁹¹)_{a'}(R⁹³)_{b'}Si(OR⁹²)_{4-(a'+b')} (I)

(where, R⁹¹ represents an organic group having glycidoxy group, epoxy group, vinyl group, methacryloxy group, acryloxy group, mercapto group, amino group, phenyl group and the like; R⁹² represents an alkyl group having 1 to 4 carbon atoms, an acyl group having 1 to 4 carbon atoms, or an aryl group having 6 to 10 carbon atoms; R⁹³ represents an alkyl group having 1 to 6 carbon atoms or an aryl group having 6 to 10 carbon atoms, and a' and b' respectively represent integers of 0 and 1.)

Examples of the alkyl group having 1 to 4 carbon atoms of R⁹² include, for example, linear or branched methyl group, ethyl group, propyl group, butyl group and the like.
Examples of the acyl group having 1 to 4 carbon atoms of R⁹² include, for example, acetyl group, propionyl group, oleyl, benzoyl group and the like.
Examples of the aryl group having 6 to 10 carbon atoms of R⁹² include, for example, phenyl group, xylyl group, tolyl group and the like.
Examples of the alkyl group having 1 to 4 carbon atoms of R⁹³ include, for example, linear or branched methyl group, ethyl group, propyl group, butyl group, pentyl group, hexyl group and the like.
Examples of the acryl group having 1 to 10 carbon atoms of R⁹³ include, for example, phenol group, xylyl group, tolyl group and the like.

Examples of the colloidal particle of metal oxide include, for example, tungsten oxide (WO₃), zinc oxide (ZnO), silicon oxide (SiO₂), aluminum oxide (Al₂O₃), titanium oxide (TiO₂), zirconium oxide (ZrO₂), tin oxide (SnO₂), beryllium oxide (BeO), antimony oxide (Sb₂O₅) and the like. These metal oxides may be used along or in combination of two or more.

The coating liquid is usually coated on the photochromic film by, for example, dipping method, spin-coating method, spraying-coating method and the like. Among these methods, dipping method and spin-coating method are preferably used considering the viscosity of the composition and the surface accuracy. Particularly, in the case where a hard coat layer (as the hard film) is formed on the photochromic film and then an optical surface is formed in the other surface, it is preferred that a spin method, which can be used to form a film only on one surface, is used. Further, in the case where the optical surface is formed in the other surface before forming the hard film, it is preferred that a dipping method, which can be used to form a film on two surfaces, is used. The adhesion between the photochromic film and the hard coat layer can be improved by performing a chemical treatment, a physical treatment and a cleaning treatment before coating the coating liquid onto the photochromic film, wherein the chemical treatment can be performed with acid, alkali and/or various organic solvents; the physical treatment can be performed with plasma, ultraviolet irradiation, ozone and/or the like; and the cleaning treatment can be performed with various detergents.

Incidentally, a primer layer, which improves impact resistance, may be formed between the photochromic film and the hard coat layer. The material of the primer layer is not particularly limited but can be any material as long as impact resistance is improved without impairing the adhesion of the hard coat. Further, as described above, a material layer, such as a silica-based inorganic material, an acrylic resin or the like, may also be formed in the lower layer or upper layer of the primer layer, so that unnecessary components from the photochromic film can be prevented from being mixed into the primer layer.

### (5) Antireflection film

In the present invention, it is possible to form an antireflection film on the hard coat layer. The material and forming method of the antireflection film are not particularly limited. The antireflection film can be a single or multi-layered construction formed by a know inorganic oxide.
Examples of the inorganic oxide include, for example, silicon oxide (SiO₂), zirconium oxide (ZrO₂), aluminum oxide (Al₂O₃), niobium oxide (Nb₂O₅), yttrium oxide (Y₂O₃), and the like.
Further, an organic antireflection film having a single or multi-layered construction formed by an organosilicon compound and inorganic particulates may also be used, where the refractive index of the organic antireflection film is adjusted defending on the type of the inorganic particulates.

### [2] Forming method of photochromic film

A typical coatingf method, such as a spin-coating method, a spraying-coating method or the like, can be used to coat the coating liquid, which is composed by the aforesaid photochromic film material, onto one surface of the lens substrate (for example, the surface on the convex side). However, considering the viscosity of the composition and the surface accuracy, it is preferred that a spin-coating method is used as the coating method. Particularly, in the case where a spin-coating method as the coating method, the film thickness can be controlled with high accuracy, and, in the case where the coating liquid is coated on the lens substrate, since only one surface is coated, no coating liquid is wasted even if the other surface is optically polished.

It is preferred that the aforesaid foundation layer for improving adhesion and the aforesaid material layer for restraining movement of a part components of the photochromic film are formed before coating the coating liquid onto one surface of the lens substrate. Further, the convex surface may be subjected to a redox treatment, a chemical treatment, a physical treatment and a cleaning treatment to improve adhesion between the lens substrate and the photochromic film, wherein the redox treatment can be performed with acid, alkali, ozone and/or the like; the chemical treatment can be performed with various organic solvents; the physical treatment can be performed with plasma, ultraviolet irradiation and/or the like; and the cleaning treatment can be performed with various detergents.

The curing condition of the coating process is not particularly limited, but a known polymerisation procedure can be used depending on the type of the used radical polymerizable monomer. Heating, irradiation of ultraviolet rays, α-rays, β-rays, γ-rays or the like, or combination of the both can be used as polymerization initiating means, and it is preferred that irradiation of ultraviolet rays is performed to cure the coating, and then heating curing is further performed.
Know light sources may be used as the light source for performing the ultraviolet curing without any limitation. Concrete examples of the light source include ultrahigh pressure mercury lamp, high pressure mercury lamp, low pressure mercury lamp, xenon lamp, carbon-arc lamp, germicidal lamp, electrodeless lamp and the like.
Further, irradiation time can be suitably determined according to the type of the ultraviolet photopolymerization initiator, the absorption wavelength, the sensitivity, the film thickness of the photochromic film, and the like.

Considering the color density, the durability, the heat-resisting property, and the uniformity of the film, it is preferred that the film thickness of the photochromic film is controlled in a range of 10µm to 100µm, and it is more preferred that the film thickness of the photochromic film is controlled in a range of 20µm to 50µm.

### [3] Forming method of optical surface

The curved surface, the convex surface and the concave surface constituting the optical surfaces of the lens substrate may be created using a curve generator. The curve generator is an NC (numerical control) cutting device for creating a curved surface shape of an object-to-be-processed by moving a cutting blade along the curved surface shape of an object-to-be-created under control of a computer. For example, a grinding device described in Japanese Unexamined Patent Application Publication No.2004-82324 can be used as the cutting device. After the grinding process, a polishing process may be performed by a polishing device according to necessity.

For example, a polishing device including a holder, a polishing jig and a polishing pad may be used as the aforesaid polishing device, wherein the holder is adapted to hold an object-to-be-polished, the polishing jig has a flexible sheet expanded into a dome shape by fluid pressure, and the polishing pad is attached on the surface of the flexible sheet. Examples of such polishing device include the polishing device described in Japanese Unexamined Patent Application Publication No.2000-1177604 and the polishing device described in Japanese Unexamined Patent Application Publication No.2003-266287. In such device, the surface-to-be-polished of the object-to-be-polished is polished by the abrasive provided between the polishing pad and the surface-to-be-polished, wherein the holder is reciprocated right-and-left and back-and-forth while the polishing jig is oscillated and turned so that a trackless polishing locus is drawn in which polishing locus is slightly deviated for each turn. In such a polishing device, a balloon member is used as the polishing jig, for example, and polishing can be performed while changing the curvature of the dome by changing internal pressure of the balloon member. Thus, there is no need to provide perpendicular part or means to change the curvature of the dome according to the curvature of the surface-to-be-polished, so that number of the kinds of the polishing jig can be substantially reduced, and the surface-to-be-polished can be reliably polished.
Incidentally, the polishing device is not limited to the aforesaid configuration, but various other polishing devices can be used.

In the second optical surface forming step performed after a photochromic film forming step (which is to be described later), in the case where the surface of the lens substrate opposite to the surface having the photochromic film formed thereon is being processed while the photochromic film is protected, it is preferred that the lens substrate is fixed by a lens holder or a fixture described in, for example, Japanese Unexamined Patent Application Publication No. 2003-334748, and the photochromic film side is fixed by a flexible sheet-like lens fixing member described in, for example, Japanese Unexamined Patent Application Publication No. 2004-330327, wherein the flexible sheet-like lens fixing member can be easily attached and detached. Thus, by using the sheet-like fixing member capable of reducing the damage to the photochromic film, the creating/polishing process for forming the second optical surface can be preferably performed without causing deformation and deterioration of the photochromic film. The holding method, the material and configuration of the holder and the like for protecting the surface having the photochromic film formed thereon used in the second optical surface forming step are not limited to the aforesaid examples, but can have other configuration as long as the photochromic film can be protected from being deformed and deteriorated.

### [4] Manufacturing process

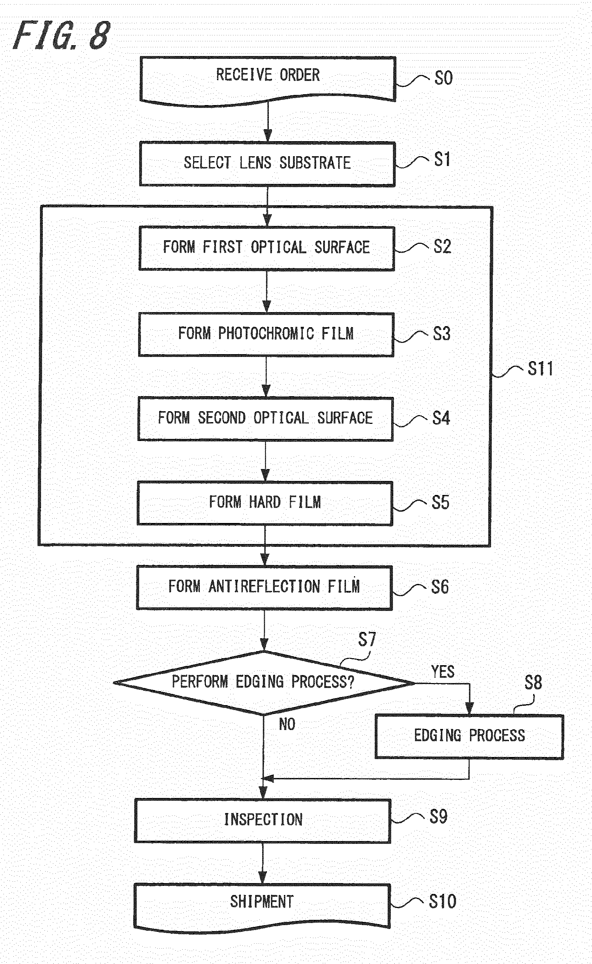

Next, the manufacturing process of the photochromic lens manufacturing method according to the present embodiment will be described below. FIG. 8 is a flowchart for explaining each step of the photochromic lens manufacturing method according to the present embodiment. The present embodiment is an example in which a photochromic lens is manufactured in the case where a progressive-addition lens is to be formed, for example; however, the present invention is not limited this example. As shown in FIG. 8, in the manufacturing method of the present embodiment, an order for the photochromic lens is received (step S0), and the data of the received order is stored in the data storage unit 510 of the photochromic lens manufacturing device 500, which has been described with reference to FIG. 3. Next, a lens substrate having suitable material, suitable diameter and suitable thickness is selected based on the data related to the lens substrate material and the data related to the lens optical surfaces among the data of the received order (step S1). Further, grinding/polishing process is performed on one surface of the selected lens substrate based on the optical surface forming data (i.e., a first optical surface forming step, step S2).

Next, a photochromic film is formed on the first optical surface of the lens substrate, which has an optical surface formed on one surface thereof (step S3). Details of the photochromic film forming step will be described later. After the photochromic film has been formed, an optical surface is formed on the other surface (a second optical surface forming step, step S4). A typical method and device for forming the optical surface of a plastic lens can be applied as the optical surface forming method and the optical surface forming device for performing the aforesaid optical surface; however, it is preferred that the surface having the photochromic film formed thereon is held by using aforesaid flexible sheet-like lens holder and the like. By using such holder, cutting and polishing can be preferably performed without causing deformation and deterioration of the photochromic film. During the procedure, it is not necessary to particularly cover the photochromic film with a protective film and the like.

After the optical surface forming step, the hard film is formed (step S5). In such a case, the hard film can be formed onto both the surface having the photochromic film formed thereon and the surface having the optical surface forming thereon. On the other hand, although not shown in the drawings, the hard film forming step may also be performed before the one-side optical surface forming step. In such a case, the hard film is only formed on the first optical surface (i.e., the surface having the photochromic film formed thereon), for example, the convex surface on the outer side of the spectacle lens. In such a case, a hard film (such as a hard coat or the like) may be further formed on the second optical surface, for example, the surface on the concave side.

The photochromic lens film forming process is completed by performing the above steps S1 to S5. In the present embodiment, among steps S1 to S5, the first optical surface forming step (step S2), the photochromic film forming step (step S3), the second optical surface forming step (step S4) and the hard film forming step (step S5) are performed as a series of consecutive steps S11.

Thereafter, the antireflection film is formed using the aforesaid various materials (step S6), and it is determined whether an edging process for fitting the lens into a spectacle frame or the like, for example, should be performed (step S7). If the edging process is to be performed ("Yes" in step S7), the processing will proceed to an edging process step (step S8). If the edging process is not performed ("No" in step S7), the processing will proceed to a pre-shipment inspection step (step S9), and thereafter the lens will be shipped (step S10), i.e., the lens will be supplied to the orderer as finished product. In the case where the orderer 100 shown in FIG. 1 is provided with the lens professing equipment 200, the aforesaid series of steps may be performed on the side of the orderer 100.

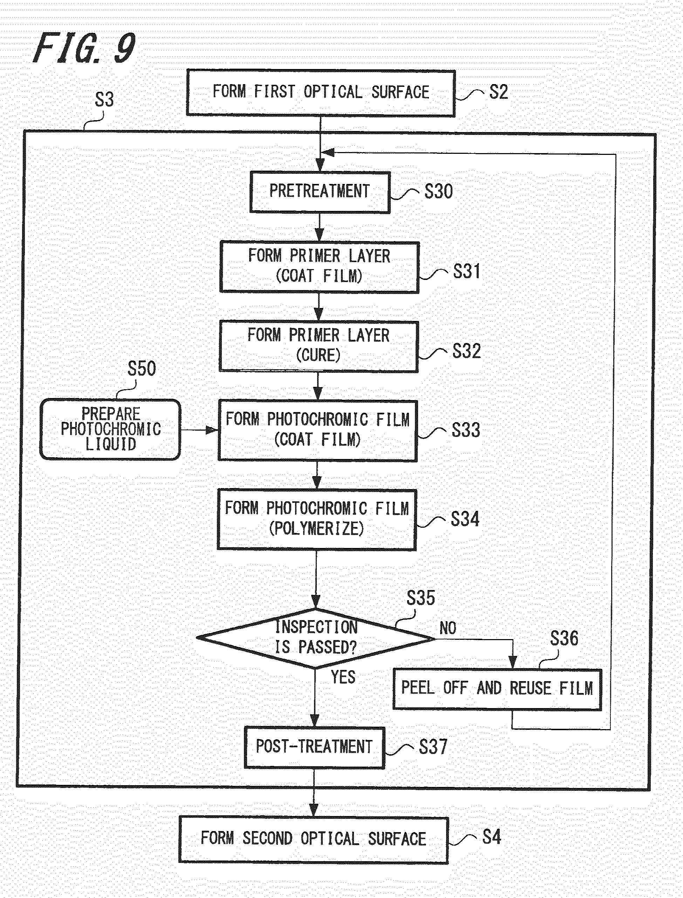

Next, the photochromic film forming step (step S3) of the photochromic lens manufacturing method according to the present embodiment will be described in detail below with reference to FIG. 9.
In such a case, as shown in FIG. 9, after the first optical surface forming step (step S2), a pretreatment for forming the photochromic film is performed (step S30): Examples of the pretreatment include, for example, wiping off dirt on the surface of the lens substrate, cleaning, cooling the lens substrate and the like. As the pretreatment, various other kinds of treatments may be added for improving the adhesion of the photochromic film and primer layer, and the like. For example, a treatment of forming a material layer of silica or acrylic resin may be farmed for preventing a part of components of the photochromic film material from being mixed into the lens substrate. Next, in the case where the primer layer (which is the foundation layer of the photochromic film) is to be formed, the primer layer material liquid is coated by a spin-coating method or the like to form a film (step S31), and then a curing process by heating or the like is performed for the primer layer (step S32). Incidentally, the coating step and curing step of the primer layer may also be omitted. Further, in the case where the primer layer is to be formed, the treatment of forming a material layer for restraining the movement of a part of the components of the photochromic film material may also be performed after the curing process of the primer layer.

On the other hand, apart from the flow of the aforesaid steps, the photochromic liquid for forming the photochromic film is separately prepared (step S50), wherein the photochromic film is composed of the material selected from the aforesaid various materials according to the received order. Further, the prepared photochromic liquid is coated onto the primer layer, or coated onto the lens substrate, if no primer layer is formed, by a spin-coating method (step S33). Thereafter, the photochromic film is polymerized and cured by heating or the like (step S34).

Thereafter, inspection of the photochromic film is performed (step S35). The inspection may be performed by irradiating ultraviolet light and visually confirming coloring state and fading state, or by measuring spectral transmittance characteristics and the like. If the inspection is failed ("No" in step S35), it is preferred that the photochromic film is peeled off and re-used, for example (step S36). The photochromic film can be peeled off by various methods such as alkali cleaning.

While if the inspection is passed ("Yes" in step S35), a heating process is performed as post-treatment (step S37), and thereby the photochromic film forming step (step S3) is completed. Thereafter, the processing proceeds to the second optical surface forming step S4, or the hard film forming step (step S5 in FIG. 8) if the hard film is to be formed first.

The photochromic film forming step described above is just an example. As described above, the primer layer forming step may be omitted, and also, other steps associated with photochromic film performance itself may be added.
It is possible to manufacture a photochromic lens having stable performance by subsequently performing a one-side optical surface forming step or a hard film forming step after the photochromic film forming step.

### 4. Examples and comparative examples

Next, results of the evaluation performed on the photochromic lens manufactured by the photochromic lens manufacturing method according to the present invention will be described below.

### (1) Evaluation can change of curvature radius of lens substrate and lens substrate having a photochromic film formed thereon

In this example, as the lens substrate, two lens substrates having a refractive index of 1.669 (EYNOA, manufactured by Hoya Corporation) are prepared, wherein one lens substrate has a concave-side optical surface formed thereon after the convex surface has been formed, without forming a photochromic film, and the other lens substrate has the convex surface formed thereon, then has a photochromic film formed on the convex surface, then has a concave-side optical surface formed thereon, and then has a hard film formed thereon subsequently. The diameter of the lens substrate is 80 mm, and the base curve BC of the lens substrate is 0.80. Incidentally, the material and forming condition of the photochromic film are the following.

### (A) Preparation of photochromic coating liquid

In a plastic container, 1.5 to 6 pts. mass (for example, 3 pts. mass) of a chromene compound as photochromic dye, 5 pts. mass of a light stabilizer LS765 (bis(1,2,2,6,6-pentamethyl-4-pyperidyl) sebacate, methyl(1,2,2,6,6-pentamethyl-4-pyperidyl) sebacate), 5 pts. mass of a hindered phenol antioxidant (Irganox (trademark) 245, manufactured by BASF), and 0.8 pts. mass of an ultraviolet polymerization initiator (CGI-1870, manufactured by BASF) were added into 100 pts. mass of a radical polymerizable monomer with sufficient stirring to obtain a composition, wherein the radical polymerizable monomer contained 20 pts. mass of trimethylolpropane trimethacrylate, 35 pts. mass of BPE oligomer (2,2-bis(4-methacryloyloxypolyethoxyphenyl) propane), 10 pts. mass of EB6A (polyester oligomer hexaacrylate), 10 pts. mass of polyethylene glycol diacrylate having an average molecular weight of 532, and 10 pts. mass of glycidyl methacrylate.
Thereafter, 3 pts. mass of γ-methacryloyloxypropyl trimethoxysilane (KBM503, manufactured by Shin-Etsu Chemical Co., Ltd.) and 3 pts. mass of γ-glycidoxypropyltrimethoxysilane (KBM403, manufactured by Shin-Etsu Chemical Co., Ltd.) were dropped into the obtained composition with stirring.
Thereafter, 2 pts. mass of N-methyldiethanolamine, which is an amine catalyst, and 0.1 pts. mass of polyoxyalkylene dimethylpolysiloxane copolymer (Y-7006, manufactured by NIPPON UNICAR Co., Ltd.), which is a silicone-based leveling agent, were added and mixed, and then the result was degassed by a rotation-and-revolution-type agitating and degassing device (AR-250, manufactured by THINKY Corporation) for 2 minutes, and thereby preparation of a coating liquid having photochromic property was completed.

### [B] Formation of photochromic film

The curable composition prepared by the process (A) described above was coated on the primer layer of the lens substrate by a spin-coating method. The spin-coating was performed by the method described in Japanese Unexamined Patent Application Publication No. 2005-218994 (i.e., a coating method using a coating device having a spin holder for holding lens material and a dispenser for dispensing coating liquid).
Thereafter, the lens was irradiated by an ultraviolet light having a wavelength of 405 nm (irradiated from a UV lamp (D bulb) manufactured by Fusion) in a nitrogen atmosphere (with oxygen concentration of 500 ppm or less). Integrating quantity of light was 1800mJ/cm² (100mW/cm², 3 minutes). Then the lens was further cured at 100 °C for 90 minutes and thereby the photochromic film was formed.

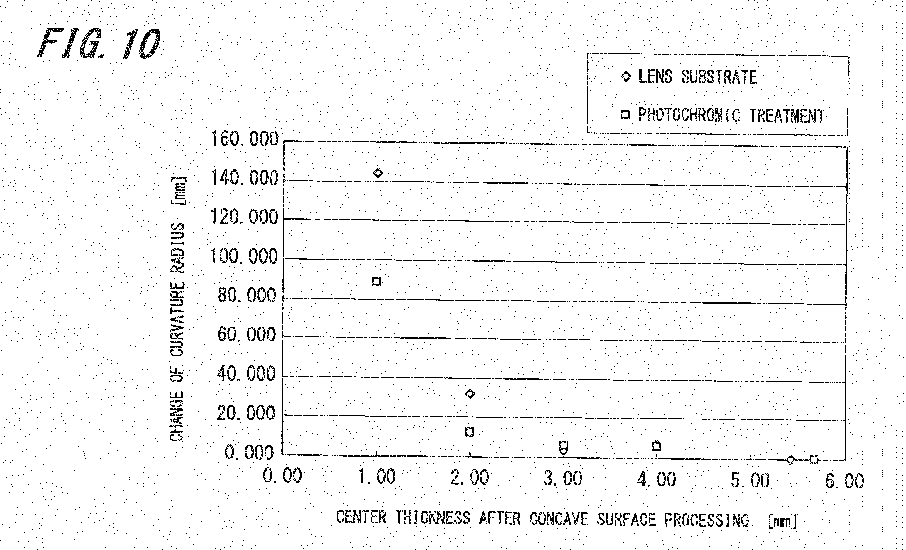

Change of curvature radius with respect to the center thickness after concave surface processing was measured for both the lens substrate having the photochromic film formed thereon and the lens substrate having no photochromic film formed thereon. The result is shown in FIG. 10. The measurement was performed using a reflective lens meter (FOCOVISIONSR-1).

It is known from FIG. 10 that the smaller the center thickness after conclave surface processing is (i.e., the thinner the central portion is), the larger the change of the curvature becomes. However, it is known that, in the case where the photochromic lens is manufactured by the photochromic lens manufacturing method according to the present invention, the change of the curvature radius is restrained compared with the lens having no photochromic film formed thereon. Thus, it is known that there is no problem with the change of the curvature of the photochromic lens manufactured according to the present invention.

### (2) Evaluation by storage promotion test

Next, change of color coordinates was measured with respect to the photochromic lenses manufactured using two kinds of materials (brown and gray) as the photochromic pigment of the coating liquid respectively for the state immediately after the photochromic film and the hard film had been formed, the state after a promotion test had been performed by storing the lens for two weeks since the photochromic film and the hard film had been formed, and for the state after a promotion test had been performed by storing the lens for four weeks since the photochromic film and the hard film had been formed, wherein the promotion test was performed under an environment of: storage condition was 40°C, and relative humidity was 90%RH.

The measurement results of luminous transmittance, YI value, L^{*}, a^{*}, b^{*} of each example of the brown photochromic lens and gray photochromic lens are respectively shown in table 1 and table 2.

**[Table 1]**

| Time | Luminous transmittance [%] | YI | L* | a* | b* |
|---|---|---|---|---|---|
| Immediately after film is formed | 32.77 | 46.02 | 63.98 | 4.40 | 17.03 |
| Storage promotion for 2 weeks | 32.08 | 56.51 | 63.41 | 7.25 | 20.43 |
| Storage promotion for 4 weeks | 32.96 | 61.86 | 64.13 | 8.14 | 22.90 |

**[Table 2]**

| Time | Luminous transmittance [%] | YI | L* | a* | b* |
|---|---|---|---|---|---|
| Immediately after film is formed | 22.26 | -32.75 | 54.30 | 2.93 | -10.82 |
| Storage promotion for 2 weeks | 21.70 | -18.21 | 53.71 | 5.14 | -7.50 |
| Storage promotion for 4 weeks | 21.87 | -9.74 | 53.89 | 5.44 | -5.18 |

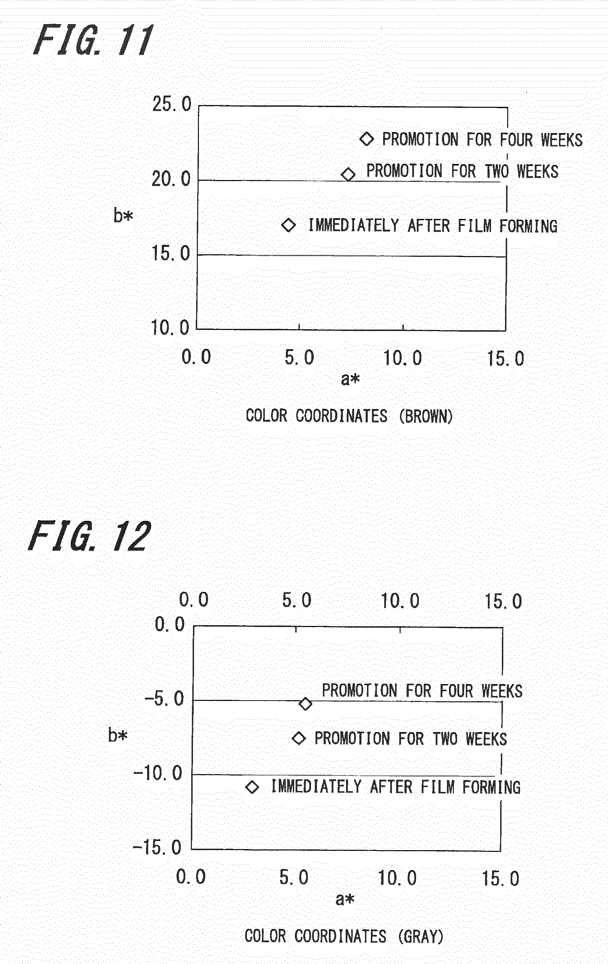

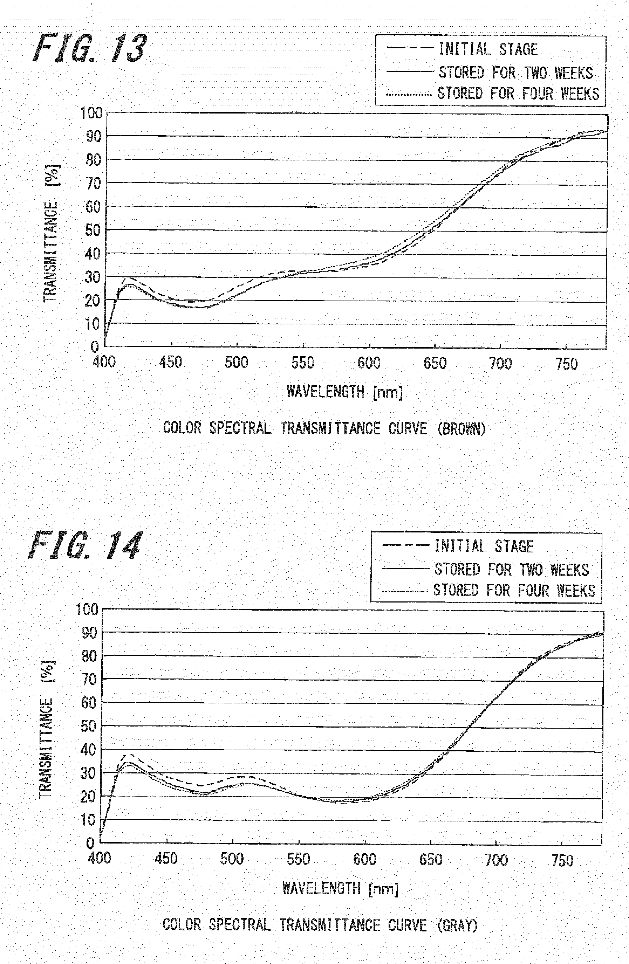

Further, the change of color coordinates of the brown photochromic lens and the change of color coordinates of the gray photochromic lens are respectively shown in FIGS. 11 and 12.
Color spectral transmittance curve under the same storage promotion condition was measured. The measurement result of the brown photochromic lens is shown in FIG. 13, and the measurement result of the gray photochromic lens is shown in FIG. 14. From FIGS. 11, 12, 13 and 14, the difference of the color tone can be known by comparing the lens immediately after being manufactured with the lens manufactured four weeks ago. Thus, if two lenses with different manufacturing date and time are fitted into one frame as a pair, subtle difference in color tone of the lenses fitted into the frame will give bad impression, therefore causing disfigurement. In order to restrain the subtle difference in color tone, the lenses need to be, for example, specially packed and stored under strict temperature and humidity management. However, such problem will not occur in the case where the lens is manufactured by the photochromic lens manufacturing method according to the present invention.

As described above, by the photochromic lens manufacturing system, the photochromic lens manufacturing device and the photochromic lens manufacturing method according to the present invention, it is possible to manufacture a photochromic lens of a received order within shorter time than conventional art by forming an optical surface on one surface of the lens substrate, then forming the photochromic film, and then forming an optical surface on the other surface and forming the hard film (or forming the hard film and forming an optical surface on the other surface) by a series of consecutive steps. Further, by performing the optical surface forming step and the hard film forming step (or performing hard film forming step and the optical surface forming step) following the photochromic film forming step, it is possible to omit unnecessary treatment such as providing a protecting film when shipping the photochromic lens in only the stage of forming the photochromic film.

Furthermore, since it is not necessary to store the lens substrates having a photochromic film formed thereon within the lens manufacturer, it is possible to reduce or eliminate labor, cost, equipment investment and the like for storing the photochromic lenses in order to supply these lenses, which are relatively less ordered compared to normal leases, rapidly. Thus, cost can be reduced. Further, it is not necessary to provide a protective film or a special package for avoiding physical influence during shipment when dyeing requires to be performed by other manufacturer, so that cost for this purpose can be reduced.

Further, since it is possible to manufacture two photochromic lenses for been fitted into one frame at the same date and time, situation that two lenses have different color tones will never occur. Further, no difference will be caused in photochromic time associated with color developing and color fading between the two photochromic lenses. Thus, it is possible to fit two lenses having equal color tone and equal photochromic property into one frame, so that aesthetic appeal can be maintained.

Incidentally, the present invention is not limited to the examples of the aforesaid embodiments. For example, the present invention may also be applied to cases where other film(s) such as a water-repellent film is provided in addition to the photochromic film, the hard film and the antireflection film, and the present invention includes various modifications and variations without departing from the spirit of the present invention.

### Explanation of Reference Numerals

- 1: lens substrate
- 2: surface-to-be-coated
- 3: rear surface
- 100: orderer
- 101: orderer side computer
- 200: lens manufacturer
- 201: manufacturer side computer
- 202: optical surface forming device
- 203: photochromic film forming device
- 204: hard film forming device
- 300: communication line
- 500: photochromic lens manufacturing device
- 501: control unit
- 502: optical surface forming control device
- 503: first film forming control device 502
- 504: second film forming control device 503
- 510: data storage unit
- 511: optical surface data storage section
- 512: lens substrate data storage section
- 513: photochromic data storage section
- 520: surface treatment unit
- 530: photochromic film forming device
- 540: hard film forming device
- 550: optical surface forming device
- 553: optical surface creating device
- 554: optical surface polishing device

## Claims

1. A photochromic lens manufacturing system having an orderer side computer and a manufacturer side computer connected with each other through a communication line, and adapted to manufacture a photochromic lens using an optical surface forming device, a photochromic film forming device and a hard film forming device arranged on the manufacturer side and controlled by the manufacturer side computer,
wherein the orderer side computer transmits the following data to the manufacturer side computer through the communication line: lens substrate data related to substrate material of the lens, optical surface data related to optical surfaces of the lens, data related to a photochromic film, and data related to a hard film,
wherein the manufacturer side computer comprises:
a lens substrate selecting means adapted to select a lens substrate formed of a suitable material based on the lens substrate data received from the orderer side computer;
an optical surface forming data selecting means adapted to select suitable optical surface forming data based on the optical surface data and output the selected data to the optical surface forming device;
a photochromic film forming data selecting means adapted to select at least forming data of the photochromic film based on the data related to the photochromic film, and output the selected data to the photochromic film forming device; and
a hard film forming data selecting means adapted to select at least forming data of the hard film based on the data related to the hard film, and output the selected data to the hard film forming device;
wherein the optical surface forming device forms an optical surface on the lens substrate selected by the lens substrate selecting means based on the optical surface forming data selected by the optical surface forming data;
wherein the photochromic film forming device forms the photochromic film on the optical surface of the lens substrate based on the data related to the photochromic film inputted from the manufacturer side computer, and
wherein the hard film forming device forms the hard film on the lens substrate based on the data related to the hard film inputted from the manufacturer side computer.

2. The photochromic lens manufacturing system according to claim 1,
wherein at least either of color and density is included in the data related to the photochromic film, and
wherein the photochromic film forming data selecting means of the manufacturer side computer selects, as the forming data of the photochromic film, at least either of the type of photochromic liquid corresponding to the color of the photochromic film and the thickness of coated film corresponding to the density of the photochromic film, and outputs the selected data to the photochromic film forming device.

3. The photochromic lens manufacturing system according to claim 1 or 2, further comprising a lens substrate storage device adapted to store a plurality of types of lens substrates,
wherein the lens substrate selecting means of the manufacturer side computer outputs lens substrate selection data to the lens substrate storage device, the lens substrate selection data being adapted to specify the type of the lens substrate selected based on the received lens substrate data, and
wherein the lens substrate storage device has a transfer means adapted to select a lens substrate fitting the data related to the type of the lens substrate and transfer the selected lens substrate to the optical surface forming device.

4. A photochromic lens manufacturing device comprising:
a data storage unit to which surface treatment data is inputted, the surface treatment data including: optical surface data related to optical surfaces of a lens to be manufactured, lens substrate data related to lens substrate material, and photochromic data at least related to a photochromic film;
a surface treatment unit including an optical surface forming means, a photochromic film forming means and a hard film forming means, wherein the optical surface forming means is adapted to form, based on the optical surface data, an optical surface on the lens substrate selected based on the lens substrate data, the photochromic film forming means is adapted to form, based on the photochromic data, a photochromic film on a lens substrate having an optical surface formed on at least the convex-side thereof, and the hard film forming means is adapted to form a hard film; and
a control unlit including an optical surface forming control device, a first film forming control device and a second film forming control device, wherein the optical surface forming control device is adapted to set a forming condition of the optical surface base on the optical surface data and the lens substrate data, the first film forming control device is adapted to set a film forming condition of the photochromic film based on the optical surface data, the lens substrate data and the photochromic data, and the second film forming control device is adapted to set a film forming condition of the hard film based on the lens substrate data.

5. The photochromic lens manufacturing device according to claim 4,
therein the photochromic film forming means includes a rotatable frame adapted to mount the lens substrate with a surface-to-be-coated (i.e., an optical surface onto which the photochromic film is to be formed) facing upward, and a dropping means adapted to drop a photochromic liquid from a nozzle onto the surface-to-be-coated,
wherein the optical surface data includes curve data related to curve of the curved surface of the optical surface, and distension data related to the outside dimension of the optical surface, and
wherein the first film forming control device controls the distance between the surface-to-be-coated and the nozzle based on the curve data, and controls the movement trajectory of the nozzle based on the dimension data.

6. The photochromic lens manufacturing device according to claim 4 or 5,
wherein at least either of color and density is included in the photochromic data, and
wherein, as the film forming condition of the photochromic film, the first film forming control device selects at least either of the type of the photochromic liquid corresponding to the color of the photochromic film and the thickness of the coated film corresponding to the density of the photochromic film, and outputs the selected data to the photochromic film forming means.

7. A photochromic lens manufacturing program for causing a manufacturer side computer incorporated in a photochromic lens manufacturing device to implement the hollowing functions, the manufacturer side computer having a data storage unit:
a function of selecting optical surface data related to optical surfaces of a lens substrate from the data storage unit;
a function of selecting lens substrate data related to the lens substrate material from the data storage unit;
a function of selecting photochromic data related to a photochromic film from the data storage unit;
a function of selecting surface treatment data from the data storage unit, the surface treatment data including data related to a hard film;
a lens substrate selecting function of selecting a suitable lens substrate based on the lens substrate data;
an optical surface forming data selecting function of selecting optical surface forming data for forming an optical surface on the selected lens substrate based on the lens substrate data and the optical surface data;
a photochromic film forming data selecting function of selecting at least forming data of the photochromic film based on the photochromic data, and outputting the selected data to a photochromic film forming device; and
a hard film forming data selecting function of selecting at least forming data of the hard film based on the data related to the hard film, and outputting the selected data to a hard film forming device.

8. A recording medium having the photochromic lens manufacturing program described in claim 7 recorded therein.

9. A photochromic lens manufacturing method comprising:
a first optical surface forming step of forming an optical surface on at least one surface of a lens substrate;
a photochromic film forming step of providing a photochromic function to the surface having the optical surface formed thereon;
a hard film forming step of providing a hard film to at least the surface having the photochromic film formed thereon; and
a second optical surface forming step of forming an optical surface on the other surface of the lens substrate,
wherein the first optical surface forming step, the photochromic film forming step, the hard film forming step and the second optical surface forming step are performed as a series of steps.

10. The photochromic lens manufacturing method according to claim 9, wherein the hard film forming step is performed subsequently after the photochromic film forming step has been performed, and then the second optical surface forming step is performed.
